(19) Europäisches Patentamt / European Patent Office / Office européen des brevets

(11) **EP 2 144 172 A1**

(12) **EUROPEAN PATENT APPLICATION**

(43) Date of publication:
**13.01.2010 Bulletin 2010/02**

(51) Int Cl.:
*G06F 17/14* *(2006.01)*

(21) Application number: **08159847.6**

(22) Date of filing: **07.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicants:
• **Mitsubishi Electric R&D Centre Europe B.V.**
**1119 NS  Schiphol Rijk (NL)**
• **Mitsubishi Electric Corporation**
**Chiyoda-ku**
**Tokyo 100-8310 (JP)**

(72) Inventors:
• **Nourisson, Xavier**
**MITSUBISHI ELECTRIC ITE**
**35708 Rennes Cedex (FR)**
• **Bouttier, Arnaud**
**MITSUBISHI ELECTRIC ITE**
**35708, RENNES Cedex (FR)**

(74) Representative: **Maillet, Alain**
**Cabinet LE GUEN MAILLET**
**5, place Newquay**
**BP 70250**
**35802 Dinard Cedex (FR)**

(54) **Computation module to compute a multi radix butterfly to be used in DTF computation**

(57)    The invention presented in this document deals with the design of such a multi radix butterfly core. It proposes a single unit composed with a series of elementary computation units. Each computation unit aims at computing the product of one row of a matrix of order r with a column vector. This unit is able to compute butterflies up to size r, some elementary computation units being unused for lower radix.

EP 2 144 172 A1

**Description**

The invention generally relates to discrete Fourier transforms (DFT). More specifically, the invention relates to the hardware implementation on digital circuits of the DFT-spread orthogonal frequency division multiplexing (DFT-spread OFDM) modulation technique. DFT-spread OFDM is specified for uplink transmissions (from the terminal to the base station) in the Long-Term Evolution (LTE) standard issued by the third generation partnership program (3GPP) for beyond third generation (B3G) cellular networks. In DFT-spread OFDM, modulation symbols are spread by a DFT prior classical OFDM modulation to benefit from a lower peak-to-average ratio (PAPR). The purpose of this spreading also called pre-coding transform according to LTE naming conventions is to reduce the power consumption of the terminals. In the 3GPP-LTE standard, DFT-spread OFDM is combined with the frequency division multiple access (FDMA) technique to form the so-called single carrier frequency division multiple access (SC-FDMA) technique. In SC-FDMA, each user is allocated over a time transmission interval (TTI) with a given number of contiguous sub-bands made of 12 consecutive sub-carriers, from 1 to 110 sub-bands in a 20 MHz bandwidth. To reduce the hardware complexity of the DFT, only a subset of DFT sizes are specified, more specifically, 43 different sizes $N$ multiple of 12 (from 12 to 1944) where $N=2^p \times 3^r \times 5^s, p, q$ and $s$ are integers.

The DFT is one specific form of the Fourier transforms named after the introduction of the Fourier series by Joseph Fourier. A definition could be found in "Digital Signal Processing, principles, algorithms, and applications" by John G. Proakis and Dimitris G. Manolakis, New-York: Macmillan Publishing Company, 1992, ch. 9. The DFT applies to functions with finite duration ($N$ values) and the result is computed by evaluating the Fourier transform at a set of $N$ equally spaced discrete frequencies. The sequence of $N$ complex numbers $\{x_k, 0 \leq k \leq N-1\}$ is transformed into the sequence of $N$ complex numbers $\{X_n, 0 \leq n \leq N-1\}$ by the DFT according to the formula:

$$X_n = \sum_{k=0}^{N-1} x_k e^{-2i\pi \frac{p}{N}}, \quad 0 \leq n \leq N-1$$

where e is the base of the natural logarithm and $i$ the imaginary unit of complex numbers ($i^2 = -1$). Many of the properties of the DFT depend on the fact that the coefficients $w_N^p = e^{-2i\pi\frac{p}{N}}$ usually called *twiddle factors* are primitive roots of unity. In its basic form, the computation of a $N$-point DFT algorithm requires O($N^2$) complex multiplications. In hardware, DFT are commonly computed using dedicated transforms usually called fast Fourier transforms (FFT) with a lower operations count. The great majority of FFT algorithms can be divided into four classes: the methods derived from the Cooley-Tukey algorithm, the methods derived from the Prime Factor Algorithm (PFA), the polynomial factorization methods and the convolution methods. These methods are not mutually exclusive, i.e. one of these methods can be used within another one to reduce the overall complexity.

The Cooley-Tukey algorithm is the reference algorithm for computing DFT transforms. A description could be found in "An algorithm for the machine calculation of complex Fourier series" by James W. Cooley and John W. Tukey, Math. Comput., vol. 19, 1965, pp. 297-301. In its most popular form, the Cooley-Tukey algorithm consists in recursively dividing a DFT of size $N$ into two transforms of size $N/2$ (divide and conquer approach). A simple approach to derive the Cooley-Tukey algorithm is to split the computation for the even- and odd-numbered frequency samples. As the same principle is applied at each step, the resulting FFT algorithm is called a *decimation-in-frequency* transform (DIF, also called the Sande-Tukey algorithm). This form which is intrinsically limited to power-of-2 sizes *(N=2")* is known as the radix-2 DIF Cooley-Tukey FFT algorithm. A decimation-in-time (DIT) version can also be obtained applying a recursive transform on the time samples. The DFT can also be expressed as a matrix-vector multiplication as follows:

$$Z = W_N Y;$$

$$Y = \begin{bmatrix} x_0 & x_1 & \dots & x_{N-1} \end{bmatrix}^T, Z = \begin{bmatrix} X_0 & X_1 & \dots & X_{N-1} \end{bmatrix}^T;$$

$$W_N = \left[ w_N^{ij} \right]_{i=0,\dots,N-1, j=0,\dots,N-1};$$

where $i$ denotes the row index and $j$ the column index. The matrix $W_N$ is called the DFT matrix of order $N$. FFT algorithms are then defined by factorizing $W_N$ into the product of a sequence of sparse matrices. The basic radix-2 DIF Cooley-Tukey FFT algorithm can be obtained through matrix factorization using the Gentleman-Sande algorithm. It is common to represent the Cooley-Tukey algorithm as a graph representing the $\log_2(N)$ stages in the computation of the DFT where each stage is made of $N/2$ basic 2-point DFT called butterflies. Each DIF butterfly reduces to an addition and a subtraction with the latter being rotated through a complex multiplication with a twiddle factor. Thus, for power-of-2 sizes $N$, the complexity of the Cooley-Tukey DFT reduces to $(N/2) \times \log_2(N)$ complex multiplications and $N \times \log_2(N)$ complex additions, much lower than the $O(N^2)$ complexity of the basic DFT.

One advantage of the Cooley-Tukey algorithm is that the computation of the core algorithm, the sequence of butterflies, can be performer *in-place,* i.e. without additional storage. Indeed, when the output of a butterfly has been computed, there is no need to save the input pair. The result of the butterfly can therefore be stored in the same location as the two inputs. In computer science, an in-place algorithm is an algorithm which transforms a data structure using a small, constant amount of extra storage space. According to this definition, the Cooley-Tukey can be described as being in-place. This advantage is counterbalanced by the fact that the Cooley-Tukey is not *self-sorting,* i.e. the output samples are not produced in a linear order. A function manipulating vectors is said self-sorting if it produces linearly ordered outputs from linearly ordered inputs. The Cooley-Tukey is not self-sorting due to the decimation resulting from the recursive computation of the odd- and even-numbered samples of the sub-DFT. It is therefore required to perform a de-scrambling operation to achieve the transform at the expense of an increased complexity and/or latency. In the case of radix-2 FFT, this operation takes the form of a *bit reversal* of the output samples addresses. Bit reversal is the permutation where the data at an index $n$, written in binary with digits $b_2 b_1 b_0$ (e.g. 3 digits for $N=8$ inputs), is transferred to the index with reversed digits $b_0 b_1 b_2$. Actually, the Cooley-Tukey algorithm does not restrict to power-of-2 sizes. It can be extended to any size of the form $N=l''$, where $l$ is an integer. Typical examples are the radix-3 and radix-4 Cooley-Tukey FFT applicable respectively on power-of-3 and power-of-4 sizes. In these cases, the unscrambling step can also be achieved by means of a reverse operation but applied on the addresses expressed in base 3 and base 4. In fact, the Cooley-Tukey algorithm can be applied to any factorization of the size $N$ into the product of any integers $N=n_1 \times n_2 \times n_3 \times \ldots \times n_L$, leading to the so-called *mixed-radix FFT* algorithms. In this case, the unscrambling stage takes a more complicated digit reversal form, limiting their actual implementation.

In 1984, Johnson and Burrus showed that the radix-2 DIT Cooley-Tukey algorithm can be rewritten to obtain a *self-sorting* and *in-place* FFT algorithm in "An in-place in-order radix-2 FFT," Proc. IEEE ICASSP, 1984, pp. 28A.2.1-4. Clive Temperton in "Self-sorting in place fast Fourier transforms," SIAM J. Sci. Stat. Comput., vol. 12, July 1991, pp. 808-823, showed that the principle used to make the Cooley-Tukey FFT both in-place and self-sorting can be generalized to other bases, e.g. to radix-3 and radix-5 algorithms. Graphically, the transform is made of a successive number of stages made of type 2 butterflies grouping a number of type 1 butterflies (the traditional ones) with interleaved outputs. It can be further extended to the mixed-radix FFT as long as the factorization of $N$ forms a *palindrome.* Thus, the algorithm will work for $N=144=3^2 \times 4^2$ if the factors are used in the order 3, 4, 4, 3 or 4, 3, 3, 4. For many transform lengths, it is not possible to arrange the factors in the symmetrical manner required for the self-sorting in-place Cooley-Tukey algorithm. An alternative to these sizes is to put the factors that cannot be written as a palindrome in the middle of the factorization. For example, for $N=6000=3 \times 4^2 \times 5^3$, the factors can be arranged as follows $N=6000=4 \times 5 \times 15 \times 5 \times 4$.

In addition to the Cooley-Tukey algorithm, the invention described in this document uses the PFA algorithm that was originally introduced by Good in "The interaction algorithm and practical Fourier analysis," J. Roy. Statist. Soc. Ser. B., vol. 20, 1958, pp. 361-372. An in-depth description of prime factor FFT algorithms has been given by Burrus in "Index mappings for multidimensional formulation of the DFT and convolution," IEEE Trans. Acoust. Speech Signal Process., vol. 25, 1977, pp. 239-242, and in "An in-place, in-order prime factor FFT algorithm," IEEE Trans. Acoust. Speech Signal Process., vol. 29, 1981, pp. 806-817. The PFA can be viewed as a variation of the Cooley-Tukey algorithms for composite sizes made of mutually prime factors. The Cooley-Tukey algorithm consists in recursively dividing a DFT of size $N_1 \times N_2$ into many smaller DFT of sizes $N_1$ and $N_2$. These operations can be formalized through an appropriate re-indexing of the input and output samples. This is achieved by re-writing the indices k and n as:

$k = N_1 k_2 + k_1$ where $0 \le k_1 \le N_1 - 1$ and $0 \le k_2 \le N_2 - 1$,
$n = N_2 n_1 + n_2$ where $0 \le n_1 \le N_1 - 1$ and $0 \le n_2 - 1$.

The first operation can be interpreted as re-indexing the input ($k$) as a two-dimensional array made of $N_1$ rows and $N_2$ columns where the original set of data is linearly stored in the columns of the array. The second operation re-indexes the output ($n$) as a two-dimensional array made of $N_1$ rows and $N_2$ columns where the expected set of data is linearly stored in the rows. When this re-indexing is substituted into the DFT formula for $nk$ the remaining term gives:

$$X_{N_2 n_1 + n_2} = \sum_{k_1=0}^{N_1-1} \left[ e^{-\frac{2j\pi}{N} k_1 n_2} \right] \left( \sum_{k_2=0}^{N_2-1} x_{N_1 k_2 + k_1} e^{-\frac{2j\pi}{N_2} k_2 n_2} \right) e^{-\frac{2j\pi}{N_1} k_1 n_1}$$

It appears that the Cooley-Tukey algorithm recursively re-expresses a DFT of a composite size $N = N_1 N_2$ as:

- Re-index the input as a $N_1 \times N_2$ array sequentially filling the columns.

- Perform $N_1$ DFTs of size $N_2$ on the $N_2$ columns of the array.

- Multiply by the twiddle factors.

- Perform $N_2$ DFTs of size $N_1$ on the $N_1$ rows of the array.

- Re-index the output sequentially reading the rows of the array.

The PFA relies on a specific mapping between the integers (*k*) and *(n)* and the corresponding integer pairs ($k_1$, $k_2$) and ($n_1$, $n_2$) of the bi-dimensional interpretation of the DFT algorithm. As a matter of fact, at least two such mapping can be used, either the one based on the Chinese Remainder Theorem map (CRT) or the Ruritanian map (also called Good's map) as described in "The relationship between two Fast Fourier Transforms" by I. J. Good, IEEE Trans. Comp., vol. 20, 1971, pp. 310-317. A different mapping can be used for the input and the output. The PFA transform is introduced here in the case of the Ruritanian map for both the input and the output which is defined by:

$n_1 = (pn) \bmod N_1$, $n_2 = (qn) \bmod N_2$,

$k_1 = (pk) \bmod N_1$, $k_2 = (qk) \bmod N_2$,

where the integers *p* and *q* are defined according to the CRT theorem which stands that if $N_1$ or $N_2$ are mutually prime, then it is possible to find integers *p, q, r, s* such that:

$$pN_2 = rN_1 + 1,$$

where $0 < p < N_1$, $0 < r < N_2$,

$$qN_1 = sN_2 + 1,$$

where $0 < q < N_2$, $0 < s < N_1$.
The inverse map is given by:

$$n = (N_2 n_1 + N_1 n_2) \bmod N,$$

$$k = (N_2 k_1 + N_1 k_2) \bmod N.$$

An example for $N=40$ ($N_1=8$ and $N_2=5$) is shown in the table below.

|   | 0 | 1 | 2 | 3 | 4 |
|---|---|---|---|---|---|
| 0 | 0 | 8 | 16 | 24 | 32 |
| 1 | 5 | 13 | 21 | 29 | 37 |

(continued)

|   | 0 | 1 | 2 | 3 | 4 |
|---|---|---|---|---|---|
| 2 | 10 | 18 | 26 | 34 | 2 |
| 3 | 15 | 23 | 31 | 39 | 7 |
| 4 | 20 | 28 | 36 | 4 | 12 |
| 5 | 25 | 33 | 1 | 9 | 17 |
| 6 | 30 | 38 | 6 | 14 | 22 |
| 7 | 35 | 3 | 11 | 19 | 27 |

It appears that the mapping can be easily built without having to find a solution to the Ruritanian equation. The entries in the first column increase from 0 in steps of $N/N_1$ (=$N_2$) while those in the first row increase from 0 in steps of ($N/N_2$= $N_1$). The remaining columns (or rows) can then be filled in by using the same increment as in the first column (or row) and taking the results modulo $N$. Applying this mapping into the DFT original formula gives:

$$X(n_1, n_2) = \sum_{k_2=0}^{N_2-1}\left( \sum_{k_1=0}^{N_1-1} x(k_2, k_2)e^{-\frac{2j\pi}{N_1}N_2 k_1 n_1} \right)e^{-\frac{2j\pi}{N_2}N_1 k_2 n_2}$$

Apart from the appearance of $N_1$ or $N_2$ multiplying the exponents, the equation takes the form of a bi-dimensional DFT of dimension $N_1 \times N_2$. Just as for the Cooley-Tukey algorithm, the DFT can be computed by performing $N_2$ DFT of length $N_1$ in one dimension followed by $N_1$ DFT of length $N_2$ in the other. The transform can also be computed starting on the other dimension. However, it must be emphasized that there are no twiddle factors between the two stages leading to a lower operation count than for the Cooley-Tukey FFT. The multiplication by $N_1$ and $N_2$ of the exponent simply modify the way the rotations are applied onto the input samples. The frequency sample with rank $n$ is computed as the linear combination of the time sample weighed by the roots of unity that are applied circulating around the unit circle with a step $n$ starting from 0. The application of the factor $N_a$ (a = 1 or 2) simply modifies the step from $n$ to $n \times N_a$. Due to the Fourier transform property, the output samples can also be obtained by simply applying a circular shift on the output samples of the standard DFT: applying a rotation $r$ to a transform of length $N_a$ means that instead of appearing in the original order 0, 1, ..., $N_a$-1, the same results appear in the order 0, $r$, 2$r$, ..., ($N_a$ -1), where the indices are to be interpreted modulo $N_a$. By using the same mapping for both the input and the output, the PFA can be made both in-place and self-sorting. Indeed, as the mapping is the same, the output samples appear in the same order as the input samples. If the re-indexing operation form the one-dimensional array to the Ruritanian bi-dimensional representation is done through implicit address translation, the output samples appear in linear order in the working array, i.e. the algorithm is self-sorting. Similarly to the Cooley-Tukey algorithm, the PFA method can be applied recursively to the decomposition of the size $N$ into the product of mutually prime factors $N=n_1 \times n_2 \times n_3 \times ... \times n_L$. It is more appropriate in this case to express the PFA algorithm in matrix form. Applying recursively the principle of the PFA algorithm conducts to the following factorization of the matrix $W_N$:

$$W_N = R^{-1}\left( W_{n_L}^{[r_L]} \times ... \times W_{n_2}^{[r_2]} \times W_{n_1}^{[r_1]} \right)R,$$

where $r_i = \dfrac{N}{n_i}\bmod n_i, \ 1 \leq i \leq L$

where $R$ is the permutation matrix which maps the integer $n$ to the corresponding L-dimensional space ($n_1$, $n_2$, ..., $n_L$) according to the Ruritanian map and where $W_N^{[r]}$ is equal to the matrix $W_N$ with all elements raised to the power $r$. As mentioned above, it is not necessary in practice to actually compute the matrix product with the permutation matrices. The required mapping can be implemented implicitly via the indexing logic.

One issue of the PFA is that the decomposition of the size into mutually prime factors may contain large factors that are not compatible with a direct computation as a simple radix transform. It is therefore required to implement these transforms using one of the other DFT transforms. In the general case of composite sizes, the smaller DFT can be computed using the Cooley-Tukey algorithm. Thanks to the work of Johnson-Burrus and Temperton in "Implementation of self-soiting in-place prime factor FFT algorithm," J. Comput. Phys., vol. 58, 1985, pp. 283-299, it is possible to compute the Cooley-Tukey transform in a self-sorting and in-place manner. The application of this extension to the PFA algorithm for the computation of the composite factors allows defining a self-sorting and in-place DFT algorithm with a lower computational complexity than the strict application of the generalized Johnson-Burrus (self-sorting in-place Cooley Tukey) transform. This algorithm has been described for sizes of the form $N=2^p\times 3^q\times 5^r$, $p$, $q$ and $r$ integers by Temperton in "A generalized prime factor FFT algorithm for any 2p3q5r," SIAM J. Sci. Stat. Comput., vol. 13, May 1992, pp. 676-686, as the Generalized PFA (GPFA) algorithm. This algorithm can be extended to any decomposition of the size as the product of powers of mutually prime integers. This was made possible by modifying the Cooley-Tukey algorithm to handle the rotation factors of the PFA algorithm. Temperton showed that the radix-$p$ DFT with matrix $W_{N=p^m}^{[r]}$, can be

computed like the DFT with matrix $W_{N=p}m$ by applying the following modifications:

- Apply the rotation $r$ (modulo $p$) to each radix-$p$ module.
- Raise all the twiddle factors to the power $r$.

For example, $W_{N=p^m}^{[r]}$ $N=pm$ can be implemented by rotating each radix-5 module by $r$'= 4 (9 modulo 5), and by raising all the twiddle factors to the power 9. This transformation is identified in the sequel by appending "rotated" to the name of the transform it is applied to.

The generalized self-sorting in-place prime factor FFT algorithm for any $N=2^p\times 3^q\times 5^r$ is constructed as follows:

- Re-index the input samples as a three-dimensional array of size $(2^p, 3^q, 5^r)$ using the Ruritanian map.
- Compute the one-dimensional transforms of length $2^p$, $3^q$, $5^r$ using the generalized rotated Johnson-Burrus scheme. The smaller DFT are thus implemented in an in-place self-sorting manner.
- Re-index the output samples as a one-dimensional transform of size $2^p$, $3^q$, $5^r$ using the Ruritanian map.

For values of $N$ suitable for the PFA, this algorithm reduces to the PFA and has the same operation count. For $N=2^p$, $3^q$ or $5^r$, the algorithm reduces to the self-sorting in-place derivation of the Cooley-Tukey algorithm and has the same operation count. If $N$ contains a mixture of factors but is unsuitable for the PFA, the algorithm has a lower operation count than the basic Cooley-Tukey algorithm.

The invention presented in this document deals with the hardware implementation of the GPFA algorithm on digital integrated circuits. Regarding the wide range of applications of the DFT, many solutions are available for the implementation of the FFT algorithms. A great majority of these solutions focus on the Cooley-Tukey algorithm and its derivations for an implementation on processors. However, for the situations where the speed is crucial, FFT algorithms are often implemented on integrated circuits. Although the Cooley-Tukey factorization of the DFT applies in some manner to all the Cooley-Tukey FFT devices, there exists a great diversity of solutions for implementing these algorithms. Integrated circuits intrinsically allow the parallelization of functions. It is therefore possible to implement all the butterflies of a given size FFT similarly to its graphical representation. This allows computing the result in a reduced number of clock cycles, but at the expense of a high complexity. The tradeoff between complexity and latency is actually what makes the difference between the different implementations of the FFT. In addition, depending on the specificities of the hardware device, solutions also differ in terms of memory usage and ratio between the number of multipliers and adders for implementing the butterflies.

Due to its popularity and rather low complexity, the radix-2 Cooley-Tukey FFT is by far one of the most widely used technique for implementing DFT in hardware. In many situations, the size of the DFT is not crucial, thus allowing the use of power-of-2 FFT with zero-padding at the expense however of an extra complexity and/or latency. In other situations such as for OFDM transmissions, the specifications of the system are often defined taking into account this constraint. What makes the radix-2 Cooley-Tukey FFT algorithm compatible with a hardware implementation is its modularity as illustrated in its graphical representation. It is actually made of $\log_2(N)$ successive stages of $N/2$ similar butterflies. As introduced above, the most straightforward solution is to implement all the butterflies just as in the graphical representation. This allows computing the DFT with a low latency and to pipeline successive DFT if data are presented in parallel which is not very common in practice. The obvious drawback of this solution is a high complexity both in terms of computing resources (multipliers and adders) and memory as the output of each step needs to be stored.

Two different approaches not mutually exclusive can be used to reduce the overall complexity: the first one is to re-use the same hardware resources to compute one stage at a time (solutions sometimes called *column FFT*). The results are fed back to the same set of process elements to compute the next stage. This allows saving memory but at the expense of a longer latency and a more complex routing architecture. The other approach is to reduce within each stage the number of processing elements ultimately to one by pipelining the computation of the different butterflies (solutions sometimes called *pipelined FFT*). This solution is particularly well suited to the situations, very common in practice, where data are applied in a serial way to the FFT device.

The most straightforward pipelined implementation of radix-2 FFT algorithm is the Radix-2 Multi-path Delay Commutator (R2MDC) described in Theory and Application of Digital Signal Processing by L.R. Rabiner and B. Gold, Prentice-Hall, Inc., 1975. The input sequence is broken into two parallel data stream flowing forward, with a correct "distance" between data elements entering a unique butterfly for each step scheduled by proper delays. Both butterflies and multipliers are in 50% utilisation. The implementation requires $\log_2(N)$-2 multipliers, $\log_2(N)$ radix-2 butterflies and $3/2N$- 2 registers. It is in fact possible to implement the FFT with a single butterfly within each stage and a single array of $N$ complex elements. The Radix-2 Single-path Delay Feedback (R2SDF) uses the registers more efficiently by storing the butterfly output in feedback shift registers as described in "Pipeline and parallel-pipeline FFT processors for VLSI implementation" by E. H.Wold and A. M. Despain, IEEE Trans. Comput., vol. C-33(5), May 1984, pp. 414-426. A single data stream goes through the multiplier at every stage. It has same number of butterfly units and multipliers as in R2MDC approach, but with much reduced memory requirement ($N$-1 registers). This approach is by far the most common with many variations with the introduction of radix-4 to further reduce the complexity (R4MDC, R4SDF, R4SDC, R2$^2$SDC).

By simply appending other stages other than radix-2 or radix-4, e.g. radix-3 or radix-5, the pipelined Cooley-Tukey FFT algorithm can be modified to compute mixed-radix FFT. It is also possible to dynamically change the size of the DFT by skipping some stages and arranging appropriately the routing between the different stages. However, while radix-2 butterflies are rather simple to implement, the complexity of other radices butterflies is significantly higher. Depending on the number of stages other than radix-2 or 4, the complexity of the FFT device can therefore become cumbersome. The main limitation of these solutions is actually that they implement the basic Cooley-Tukey algorithm which is not self-sorting. It is therefore required to implement an unscrambling stage that consumes either extra memory and/or latency. This unscrambling stage can also become rather complex in the case of mixed-radix FFT.

Another limitation of the use of higher order radices is the necessity to implement rotations both for the implementation af the basic DFT and the rotation by the twiddle factors. As mentioned above, it is better in these cases to rely on the PFA algorithms that gets rid of the multiplication by the twiddle factors using an appropriate indexing of the input and output data. Another advantage of the PFA algorithm is that it can be implemented so as to be self-sorting and in-place thus saving both clock cycles and memory. The issue is that the PFA algorithm is only applicable for factorizations of the size into mutually prime factors. This is not an issue for applications that require the computation of one given length DFT.

As described in "3780-point Discrete Fourier Transformation processor" by L. Zou and X. Huang, *European patent application No.* 05300651. 6, August 2005, in the case of a 3780-point DFT, a solution is to pipeline different DFT modules that corresponds to the mutually prime factors, here 140-point and 27-point DFT. The 140-point DFT is computed using the nested Winograd transform decomposed into 4-point, 5-point and 7-point DFT modules while the 27-point DFT is computed using the Cooley-Tuckey algorithm which is decomposed into 9-point and 3-point DFT modules. The advantage of relying on the PFA algorithm is to avoid the multiplication by the twiddle factors. However, the pipelining of the different stages does not allow taking advantage of the in-place nature of the PFA algorithm as several buffers are needed between each stage. In addition, the combination of the Cooley-Tukey algorithm and the pipelining approach makes it necessary to implement an unscrambling stage.

It seems rather difficult to benefit from the advantages of the PFA algorithm using the pipelining approach, especially for handling dynamically changing sizes. An interesting solution is to use the column approach of the FFT that consists in processing the different stages using the same set of processing elements by looping over a single storage element. This solution is implemented in "Optimized discrete Fourier transform method and apparatus using prime factor algorithm" by R. S. Buchert, S. M. Shahrier and P. Becker, *United State Patent No.* 7,028,064 B2, April 2006, where a single processing element called "PFA circuit" is used to perform the sub-DFT associated to the decomposition of the size into mutually prime factors. This device implements the sub-DFT using a kind of programmable multiply and add (MAC) unit. In fact, the device embeds two such MAC units combined together to take advantage of the inherent symmetries of twiddle factors, thus reducing the overall complexity. This solution is very attractive as long as the size can be decomposed into relatively small prime factors, which is the intrinsic limitation of the PFA algorithm. Indeed, if the decomposition contains a factor of the form $N_i=2^m$, the $2^m$-point DFT is computed using the MAC unit, which is not computationally efficient. In addition, the PFA device is not implemented in a self-sorting manner, thus requiring output permutation stages.

One of the main difficulties to solve when implementing a DFT computation module that can be used to compute different sizes of DFT is the design of a multi-radix butterfly core keeping a low complexity that is able to compute butterflies on the flow.

The invention presented in this document deals with the design of such a multi radix butterfly core. It proposes a single unit composed with a series of elementary computation units. Each computation unit aims at computing the product of one row of a matrix of order r with a column vector. This unit is able to compute butterflies up to size *r*, some elementary computation units being unused for lower radix.

The invention relates to a computation module to compute a multi radix butterfly to be used in DFT calculation comprising multiplication means to compute the product of a complex matrix of order corresponding to the current radix with a column vector of complex data values; rotation means to apply a rotation on all the elements of the column vector resulting from the multiplication means and wherein these means are implemented in the form of a plurality of elementary computation units, each one treating one row of the matrix in parallel, the number of such computation units corresponding to the higher radix that could be computed by the computation module and wherein it further comprises means to deactivate some of the elementary computation units in order to allow computation of butterflies of lower radices.

According to a particular embodiment of the invention, each elementary computation unit comprises for each two real part of the complex multiplier adder means to compute the matrix product; multiplication means to compute the rotation and the same multiplier is used for the multiplier adder means and the multiplication means.

According to a particular embodiment of the invention, the first complex element of each row of the matrix being constituted by values 0 or 1, the computation module comprises means to enter this first element by the accumulation entry of the multiplier adder means in order to save two multiplier adder steps for the multiplication computation.

According to a particular embodiment of the invention, complex data being received at a given complex frequency, the computation module working on reals works at twice the complex frequency.

According to a particular embodiment of the invention, the first two rows of the real matrix being constituted by values 0 or 1, the first elementary computation unit of the plurality comprises adder instead of multipliers.

According to a particular embodiment of the invention, the numbers being represented according to a fixed point scheme, the module further comprises a scaling unit to control the number of bits used to represent data.

According to a particular embodiment of the invention, the scaling unit is dynamic meaning that it can be customized according to different requirements in terms of tradeoff between dynamic and precision.

According to a particular embodiment of the invention, each elementary computation unit further comprises means to change the sign of the accumulation.

According to a particular embodiment of the invention, it further comprises means to deviate input of the first elementary computation unit, composed of adder, to unused elementary computation unit to allow a step of gain multiplication to be implemented using the multipliers of the elementary computation unit for radix below the maximum radix that could be calculated.

The characteristics of the invention will emerge more clearly from a reading of the following description of an example embodiment, the said description being produced with reference to the accompanying drawings, among which:

Fig. 1 illustrates the DFT core architecture in an exemplary embodiment of the invention.

Fig. 2 illustrates the principle of the computation of a radix-5 butterfly in a matrix form as used in an exemplary embodiment of the invention.

Fig. 3 illustrates the architecture of the Multi-radix Butterfly module in an exemplary embodiment of the invention.

Fig. 4 illustrates the architecture of a multiply and accumulate (MAC) unit as used in an exemplary embodiment of the invention.

Fig. 5 illustrates a variant of the control of the MAC unit in an exemplary embodiment of the invention.

Fig. 6 illustrates a variant of the implementation of the Multi-radix Butterfly module in an embodiment of the invention.

Fig. 7 illustrates the coupling of two MAC units in an exemplary embodiment of the invention.

Fig. 8 illustrates an example of architecture for the DFT engine module in an exemplary embodiment of the invention.

Fig. 9 illustrates an example of accumulator as used in the Address Generator in an exemplary embodiment of the invention.

Fig. 10 illustrates the state machine of a first version of the data manager in an exemplary embodiment of the invention.

Fig. 11 illustrates a variant of the Data Manager module for optimizing sequence of DFTs according to an alternative embodiment of the invention.

Fig. 12 illustrates a variant of the Data Manager module for reducing the latency according to an alternative embodiment of the invention.

Fig. 13 illustrates in details the loading step of the Data Manager module in the last embodiment of the invention.

Fig. 14 illustrates in details the calculation step of the Data Manager module in the last embodiment of the invention.

Fig. 15 illustrates the necessary operations for reorganizing data during the calculation step of the Data Manager module in the last embodiment of the invention.

Fig. 16 illustrates in details the dumping step of the Data Manager module in the last embodiment of the invention.

Fig. 17 illustrates the computation of a radix-3 butterfly.

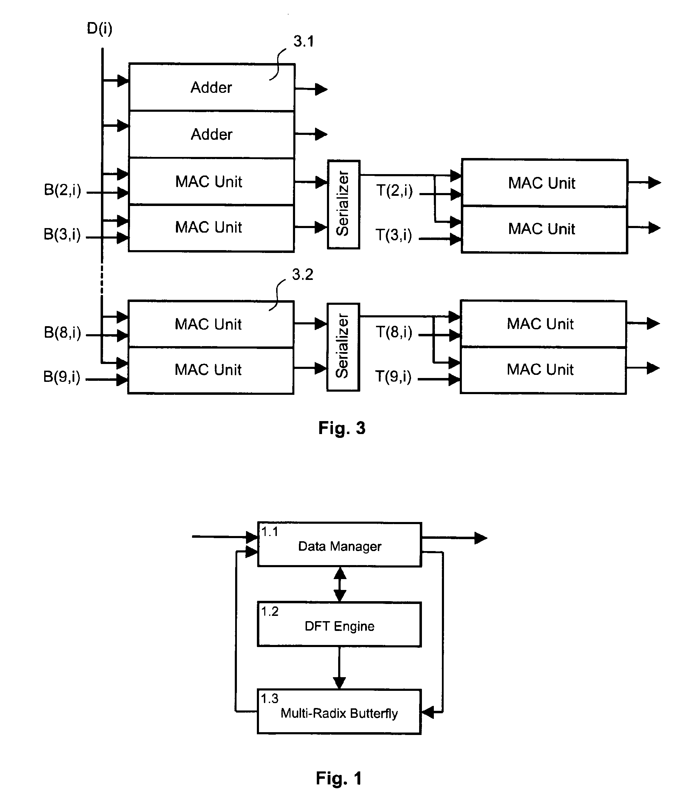

The device described in this invention as the DFT core can be used by any system requiring the computation of DFT on digital integrated circuits on a set of complex values with size $N=2^p \times 3^q \times 5^r$, where $p$, $q$ and $r$ are integers potentially varying from one transform to the other. It realizes an hardware implementation of the GPFA algorithm. In that context, It could easily be extended to any composite sizes that can be factorized into the product of mutually prime numbers, where some or all of these numbers can expressed as the power of a given base. The DFT core is assumed to work between a data source and a data destination functioning at the same clock frequency, denoted as the user clock. The description hereafter of the DFT core consists of three main independent parts presented in Fig. 1 which are a Data Manager module 1.1, a DFT engine module 1.2 and a Multi-radix Butterfly module 1.3. Besides being designed to work together, the three parts of the DFT core are independent, i.e. could be implemented in a different framework. Data Manager 1.1 is the interface with the user system which means that it receives data values from the data source and sends resulting values to the data destination. DFT engine module 1.2 sequences the elementary DFT stages, enables the Data Manager module 1.1 to feed appropriately the Multi-radix Butterfly module 1.3 with data values and save the resulting values. The DFT engine module 1.2 also controls the Multi-radix Butterfly module 1.3.

The use of a single Multi-radix Butterfly module to compute all the butterflies of different sizes is the key point to address the issue of a flexible design able to compute different sizes of DFT using few resources and being in place. Contrary to the software implementation of GPFA which use different functions for the different step of the radix computation, the invention does not rely on several different radix modules to compute the DFT, but on a single reconfigurable unit.

In a first step, the Multi-radix Butterfly module 1.3 computes the product of a complex matrix of order $r$ where $r$ is the current radix with a column vector of complex data values. In a second step, it applies a rotation on all the elements of the column vector resulting from the first step computation. The complex matrix corresponds to the DFT matrix of order $r$. The extra rotations are used to apply twiddles factors rotations. The complex matrix formula of a DFT of size $r$ is shown the equation below:

$$B_r = (b_{k,l})_{\substack{0 \le k < r \\ 0 \le l < r}} = e^{\frac{2i\Pi kl}{r}}$$

where $i$ the imaginary unit of complex numbers ($i^2 = -1$).

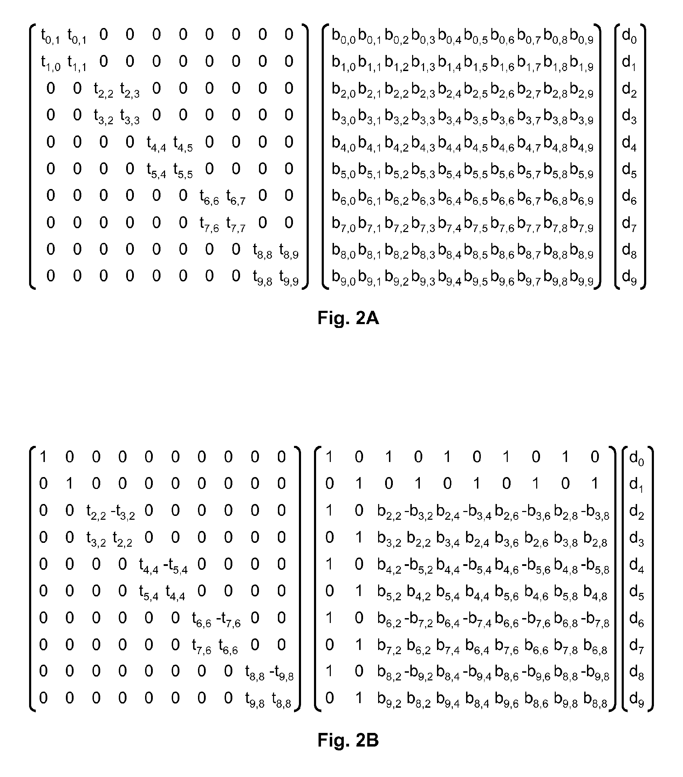

Actually, the Multi-radix Butterfly module 1.3 works only on real values according to the Cartesian representation. The multiplication of two complex numbers is seen as the product of an order 2 matrix with a column vector. The Multi-radix Butterfly module 1.3 performs the product of a real matrix of order $2r$ with a column vector before making $r$ products of a real matrix of order 2 with $r$ column vectors. Fig. 2A shows the real product calculated by the butterfly matrix with $r=5$. The equations below show the values of $b_{k,l}$ and $t_{k,l}$:

$$B_r = (b_{k,l})_{\substack{0 \le k < r \\ 0 \le l < r}} = \begin{cases} \cos(\frac{2i\Pi \lfloor k/2 \rfloor \lfloor l/2 \rfloor}{r}) & \text{if } k \text{ and } l \text{ are of same parity} \\ \sin(\frac{2i\Pi \lfloor k/2 \rfloor \lfloor l/2 \rfloor}{r}) & \text{if } k \text{ is even and } l \text{ is odd} \\ -\sin(\frac{2i\Pi \lfloor k/2 \rfloor \lfloor l/2 \rfloor}{r}) & \text{if } k \text{ is odd and } l \text{ is even} \end{cases}$$

$$T_r = (t_{k,l})_{\substack{0 \le k < r \\ 0 \le l < r}} = \begin{cases} \cos(i\alpha \lfloor k/2 \rfloor) & \text{if } k = l \\ \sin(i\alpha \lfloor k/2 \rfloor) & \text{if } k = l+1 \\ -\sin(i\alpha \lfloor k/2 \rfloor) & \text{if } l = k+1 \\ 0 & else \end{cases}$$

A first optimization consists in reducing the number of multiplications which consumes resources and thus energy by using properties of the matrices $T$ and $B$. Coefficients $b_{2k,0}$, $b_{2k+1,1}$, $b_{0,2l}$ and $b_{1,2l+1}$ equal 1 whereas coefficients

$b_{2k,1}$, $b_{2k+1,0}$, $b_{1,21}$ and $b_{0,2l+1}$ are null. In the same way, coefficients $t_{0,0}$ and $t_{1,1}$ values equal 1 whereas coefficients $t_{1,0}$ and $t_{0,1}$ values are null. No multiplication is needed for these coefficients. Fig. 2B shows the product calculated by the butterfly matrix after simplification.

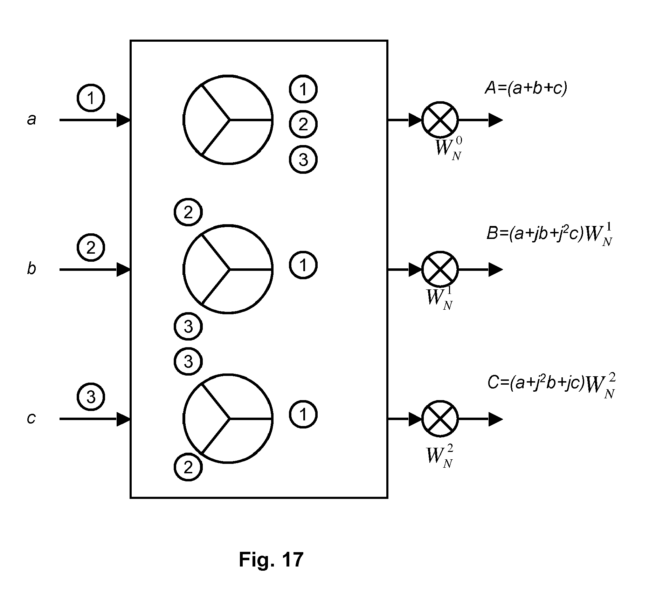

Fig. 17 is an illustration of the radix-3 butterfly. This figure shows the three entries *a*, *b* and *c*. It also shows the angles applied to determine the twiddle factors and the rotations. As can be seen on this figure, the first value *a* is always affected with an angle of 0 meaning that it is always multiplied by the value 1 in the computation of each output. It can also be noted that for the computation of the first output *A*, all values are affected with an angle of 0 and that the rotation term $W_N^0$ being elevated to the power 0 is always equal to 1, meaning that no multiplication are needed for the computation of the first output. This remark is verified for all radices.

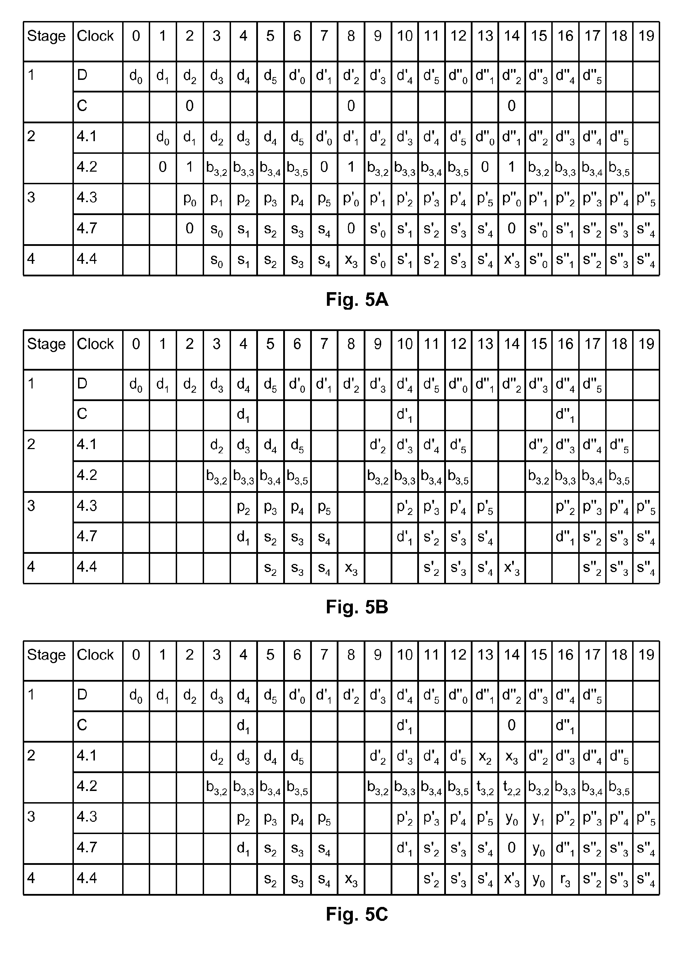

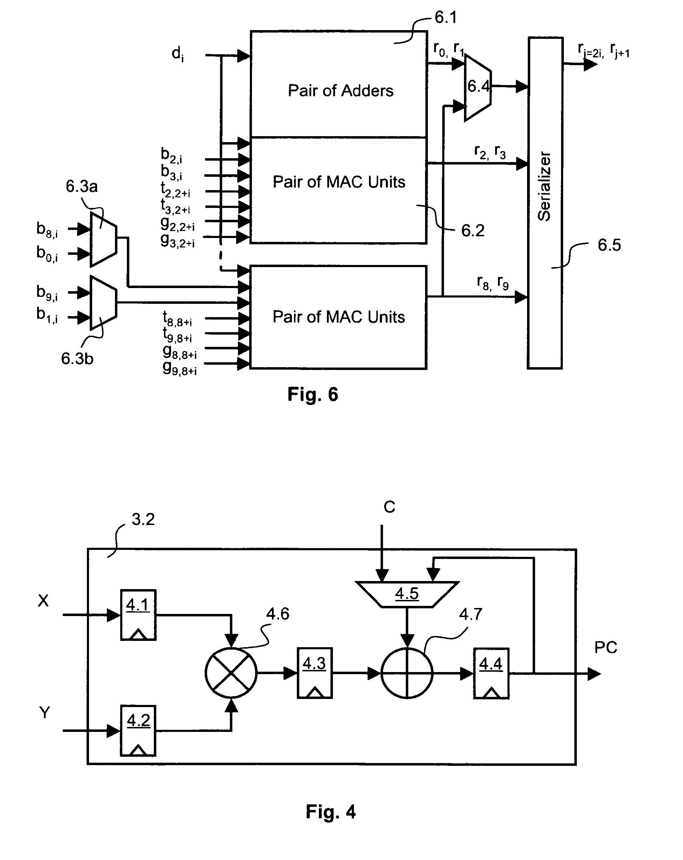

The retained solution for implementation is the treatment of each row of the matrix independently and in parallel by elementary computation units. One elementary unit comprises typically two MAC units, one for each real part of the complex. In the following we consider the real matrix. Excepting the first two rows that require only adders as explained above, MAC units are used to multiply each element of one row of the matrix *B* or *T* with each element of the column vector of data values and cumulate intermediate results to obtain the final column vector. Since radix-5 must be supported, 8 MAC units are implemented but more units could be implemented if higher radix were required. Moreover, this implementation enables to inactivate MAC units when a butterfly of lower radix is computed thus saving energy. Fig. 3 represents the layout of the adders and the MAC units in a first embodiment of the Multi-radix Butterfly module 1.3. An example of MAC unit is presented in Fig. 4. The inputs *X* and *Y* are connected to two buffers 4.1 and 4.2 before the multiplier 4.6. The output of the multiplier 4.6 is connected to a buffer 4.3 that is connected to the adder 4.7. This adder also takes the output of the multiplexer 4.5 and puts its output into the buffer 4.4 that is connected back to one input of the multiplexer 4.5 to realize the accumulation. The accumulator can be reset using the input C of the multiplexer by selecting a null input on *C*. The output of the buffer 4.4 is the output of the MAC unit. Fig. 5A shows the timing sequence for the processing of three contiguous radix-3 butterflies inside MAC unit 3.2 on data vector *D, D'* and D'' providing intermediate results *X, X'* and *X''*. Elements of the fourth row of matrix B and elements of the column vector are multiplied one by one and add to an accumulator previously reset to null value before each new butterfly computation. The $p_i$ values result from the product of $d_i$ values with $b_{3,i}$ values while $s_i$ values result from the accumulation of $p_j$ values with $j{\leq}i$. The intermediate result $x_3$ is the last value $s_i$.

An optimized version of the Multi-radix Butterfly module 1.3 fuses the two stages of MAC units (butterfly and rotation) into a single one. Since the two first elements of one row of the radix matrices *B* are always (1,0) for even row and (0,1) for odd one, MAC unit attached to even row can be preloaded with the first value of column vector whereas MAC unit attached to odd row can be preloaded with the second one. It enables to free processing times in MAC units between each butterfly computation as shown in Fig. 5B. These times are used to insert rotation processing as shown in Fig. 5C. Serialization between the two stages is still necessary and requires the coupling of two MAC units in order to reinsert couples of values. In Fig. 5, the intermediate result $x_2$ provided by the MAC unit attached to the third row of matrix B is necessary and is inserted with the intermediate result $x_3$, the $y_i$ values result from the product of $x_i$ values with $t_{3,i}$ values while $y_i$ values result from the accumulation of $x_j$ values with $j{\leq}i$. The final result $r_3$ is the sum of $y_i$ values.

A second optimization that depends on the MAC units ability to make subtraction is to replace the addition by a subtraction when coefficients values $b_{k,l}$ and $t_{k,l}$ (*k* and *l* of different parity) come with a negative polarity. Thus, the need to inverse the sign of values is no more relevant and only a flag indicating the type of operation is required. This optimization is very useful when it comes to consider opposed angle which is the case when a rotation of $\pi$ must be done on a radix butterfly, when the DFT is configured as an Inverse DFT (IDFT) or when angles should belong to the interval $[\pi;2\pi]$ ($\sin(-\alpha) = -\sin(\alpha)$).

This embodiment of the Multi-radix Butterfly module 1.3 is compatible with different representation of data values and fixed or floating point can be used. In the case of fixed point usage, extra bits inside MAC Units can be used in order not to saturate accumulator. It requires the extension of input data values to more bits and the presence of a scaling module to control the number of bits used to represent data.. When most significant bits are removed, the scaling is advantageously achieved with control of the saturation. When removing least significant bits, the scaling is advantageously achieved with rounding to the closest value. On issue when performing scaling is to apply the optimal tradeoff between dynamic and precision. Advantageously, this scaling module is dynamic which means that it could be adapted to the size of the DFT being calculated. For example, it could be realized using two scaling modules able to resize the results at multi-radix butterfly outputs. The first one resizes MAC Units outputs in order to reinsert the results inside the MAC units for rotation application. Since extra bits are used, saturation management is not required. The second scaling module must manage saturation in order not to output erroneous values and could preferably have the ability to dynamically control the resizing window in order to adjust between dynamics range and precision of output values.

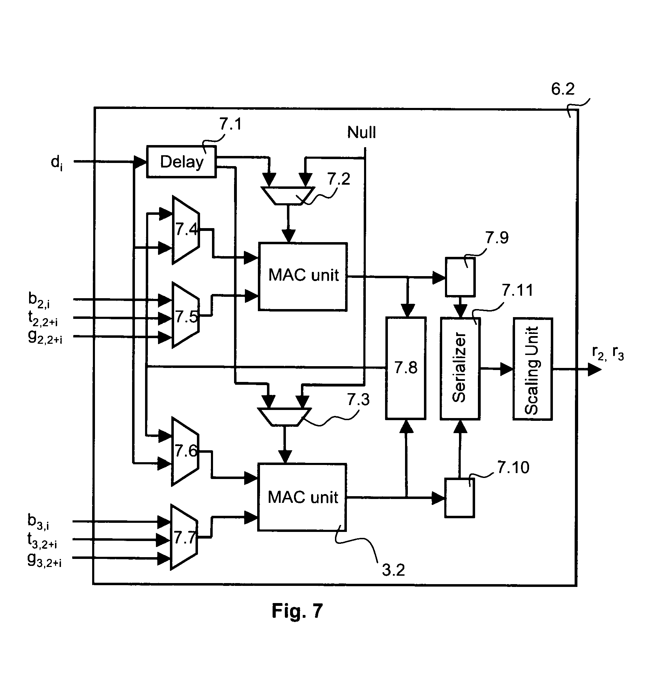

Finally, the Multi-radix Butterfly module 1.3 comes in its last embodiment with the ability to adjust output gain in the case of null twiddle factors. It becomes very useful in DFT where no rotation is needed during the last stage. Thus, the overall gain of the DFT can be adjusted at the very end of the computation. This new functionality is made by no more using matrix $T$ but a diagonal matrix $G$ whose coefficients $g_{k;l}$ are equal to the desired gain adjustment and by deviating inputs of adders (3.1 for example) to unused MAC units which is the case when Multi-radix Butterfly module 1.3 has been sized for a maximal radix $r$ and last stage uses a radix $r'$ inferior to $r$. Fig. 6 presents an example of implementation of the Multi-radix Butterfly module 1.3 in its optimized version. Input data $d_i$ is inserted alternating real and imaginary part of the complex data vector. Coefficients $b_{k,l}$, $t_{k,l}$ and $g_{k,l}$ are inserted also. Multiplexers 6.3a, 6.3b and 6.4 are used to deviate the computation of the first two rows of the $B$ matrix from the adders to the last MAC units in order to adjust the gain since multiplications are required. In this implementation, real part $r_{2i}$ and imaginary part $r_{2i+1}$ appear sequentially at outputs of the Pair of Adders module 6.1 and MAC units (6.2 for example) but could appear at the same time. The pair of adders makes the computation of the two first rows of the matrix $B$ by adding the real part and the imaginary part individually, serializing and scaling the two results, and delaying them to adjust with the pairs of MAC units' latency. The pairs of MAC units make the rest of the computation. The Serialization module 6.5 serializes the results from adders and MAC units and outputs results $r_i$ alternating real and imaginary part of the complex values but could output at the same time in another implementation real and imaginary part of complex values at a two times lower frequency. Fig. 7 shows an example of implementation of the scaling module inside a couple of MAC Units. Multiplexers 7.4, 7.5, 7.6 and 7.7 are used to alternate phases of butterfly computation and phases of rotation computation. The module 7.1 delays input data in order to insert it into accumulators of MAC units via multiplexers 7.2 and 7.3. The latter can also reset the accumulators with null value. When results appear at the outputs of MAC units for the first time, they are buffered and scaled into module 7.8. When a window for rotation for rotation computation appears, the two values output sequentially and re-enter inside MAC Units with either twiddle factors or gain coefficient. In this implementation, when results appear at the outputs of MAC units for the second time, they are buffered inside blockers 7.9 and 7.10 before sequentially entering inside the single scaling module 7.11 saving a second scaling module that would have used resources. The scaling module 7.11 can work at a two times lower frequency.

It is to be noted that this Multi-radix butterfly can be used in different architecture designs according to the actual desired computation. While being particularly suited to the described DFT computation design it is not limited to this one.

The DFT Engine module 1.2 is the second main element of the DFT core module and takes place between the Data Manager module 1.1 described in another section and the Multi-Radix Butterfly module 1.3. Its role is to configure, run and coordinate the two other main elements. This module comprises expression means to express the DFT according to its size in a sequence of elementary butterflies. It also comprises scheduling means to schedule the DFT in the form of a sequence of nested loops and to generate for each butterfly the relevant input and output data addresses in the data manager. It also comprises customization means to customize the sequence of nested loops according to the size of the DFT.

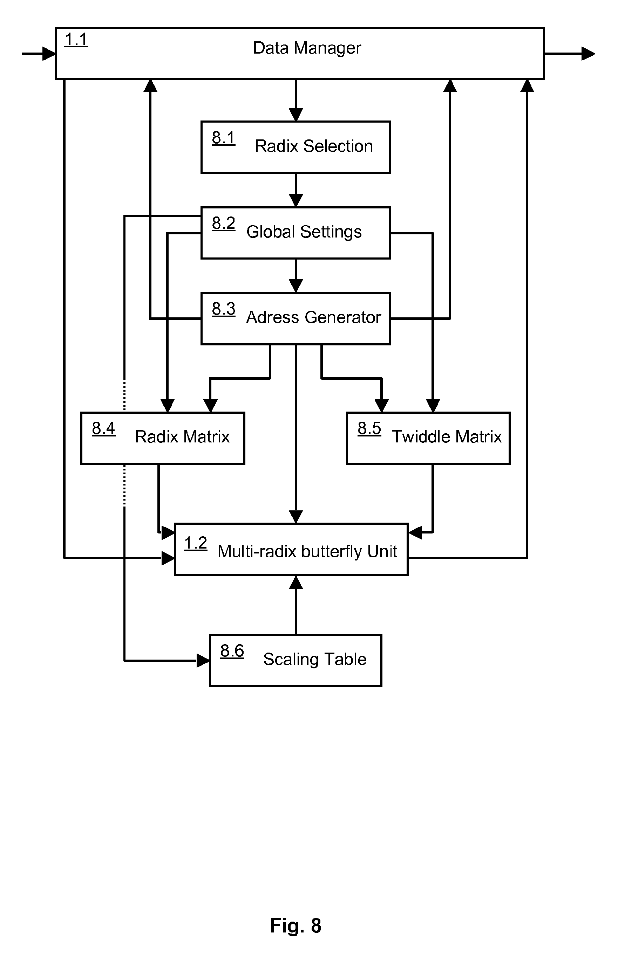

A detailed view of the DFT Engine module inserted in the DFT core is depicted on Fig. 8. It consists in 6 sub-elements. The Radix Selection module 8.1 sequences the DFT stages. The Global Settings module 8.2 configures all the other sub-elements of the DFT engine. The Address Generator module 8.3 runs the elementary butterflies that compose a DFT stage by driving the Data Manager module 1.1 and the Multi-Radix Butterfly module 1.3 through the sub-elements Radix Matrix module 8.4 and Twiddle Matrix module 8.5. These two last sub-elements convert indexes into coefficients useable by the Multi-Radix Butterfly. Depending on the implementation of the Multi-Radix Butterfly module 1.3, the Scaling Table module 8.6 may become optional. In fixed point representation, it configures the scaling of intermediate results inside the Multi-Radix Butterfly. In the DFT Engine described herein, the Data Manager module 1.1 can be seen as a single memory with one reading port and one writing port.

The DFT Engine starts when the Data Manager module contains the entire set of input data. It runs with its own independent clock since the Data Manager acts as a buffer. Knowing the size of the DFT (that can be set up as an input or computed using a counter during storage), the Radix Selection module 8.1 prepares the sequence of radices 2, 3, 5 (and eventually 4 in some embodiments) corresponding to decomposition into the DFT stages, and send the first radix to the Global Settings module 8.2 which configures all the other modules. Once configured, the Address Generator module 8.2 starts and drives all the others modules automatically. Using addresses, it enables the Data Manager module 1.1 to feed the Multi-Radix Butterfly with data in the appropriate order and to save intermediate results in the right places. Using indexes, the Radix Matrix module 8.4 and the Twiddle Matrix module 8.5 produce the coefficients required for the calculation of the butterflies. When the Address Generator module 8.3 reaches its last butterfly, the Radix Selection module 8.4 selects the next radix (starting again the Address Generator module 8.3) until the last one. Once the Radix Selection module 8.4 ends, the Data Manager module 1.1 contains the final result of the DFT in the right order.

When computing a DFT of size $N$ where $N=N_2\times N_3\times N_5=2^p\times 3^q\times 5^r$, the GPFA algorithm processes successively the DFT $W_{N_2}^{[N_3 N_5]}$, $W_{N_3}^{[N_2 N_5]}$ and $W_{N_5}^{[N_2 N_3]}$ following the Ruritanian map. The re-indexing matrices $R$ and $R^{-1}$ are absorbed inside each function. This sequence defines a first loop and initiates the calculation of the two-dimensional

DFTs of size $N_2 \times (N_3 N_5)$, $N_3 \times (N_2 N_5)$ and $N_5 \times (N_2 N_3)$ decomposed relatively in a second loop in $p$ radix-2 stages, $q$ radix-3 stages and $r$ radix-5 stages. Each radix can be either of type 1 or type 2 according to GPFA algorithm.

The Radix Selection module 8.1 is in charge of these two loops. In the described embodiment, counters maintain the number of radix to do for each radix size and type and are initialized with the DFT decomposition into radix stages (radix-2 type-1, radix-2 type-2, radix-5 type-1, radix-5 type-2, radix-3 type-1 and radix-3 type-2). In an alternative embodiment, radix-4 stages of type 1 and 2 enter in the decomposition. These decompositions can either be calculated or stored in a table (limiting the number of managed DFTs to the number of stored decompositions). When starting a new radix stage, the corresponding counter is decremented. Priorities are set among the counters to sequence the radix size and type according to the GPFA Algorithm. For example, counters associated to radix-2 stages have priority on the ones associated to radix-5 stages which have priority on the ones associated to radix-3 stages. In an alternative embodiment, for example, the sequence of radix-4 and radix-2 must form a palindrome.

At last, the Radix Selection module 8.1 drives the Global Settings module 8.2. It outputs the selected radix with size and type, and the progression inside the calculation of $W_{N_i}^{[N_o]}$. This progression is defined by the stage number inside the stages of same prime factor. The number of stages of same prime factor corresponds to the powers of prime factors. The distinction between radix size and prime factor is necessary to sequence radix-2 and radix-4. In an alternative embodiment, the selection of a radix-4 increments the stage number by 2.

The Global Settings module 8.2 is used to produce useful global parameters to other sub-modules of the DFT Engine module 1.2.

The Address Generator module 8.3 consists of six imbricate loops. The Global Settings module 8.2 generates maximum iterations of the loops and increments for address calculation. The table below lists the loops from outer to inner for radices 2, 3 and 5. $N_o$ and $N_i$ are such that the size $N_o \times N_i = N$ where $N$ is the size of the DFT and $N_i$ a power of the current radix. These two values can either be calculated or stored. The values *radix, stage* and *power* come from the Radix Selection module 8.1.

| Description | Name | Radix of type 1 | Radix of type 2 |
|---|---|---|---|
| Number of divisions | NB_DIVISION | $radix^{(stage-1)}$ | $radix^{2(stage-1)-power}$ |
| Jump to next division | JTN_DIVISION | $N_o \times radix^{power-(stage-1)}$ | $N_o \times radix^{power-(stage-1)}$ |
| Number of subdivisions | NB_SUBDIVISION | 1 | $Radix^{power-stage}$ |
| Jump to next subdivision | JTN_SUBDIVISION | - | $N_o \times radix^{stage}$ |
| Number of parallel schemes | NB_TRANSVERSE | $N_o$ | $N_o$ |
| Jump to next parallel scheme | JTN_TRANSVERSE | $N_i$ | $N_i$ |
| Number of interleaved NB_BUTTERFLY butterflies | NB_BUTTERPLY | $Radix^{power-stage}$ | $Radix^{power-stage}$ |
| Jump to next interleaved butterfly | JTN_BUTTERFLY | $N_o$ | $N_o$ |
| Number of elementary butterfly | NB SUBB | 1 | Radix |
| Jump to next elementary butterfly | JTN_SUBB_IN JTN_SUBB_OUT | - - | $N_o \times radix^{(stage-1)}$ $N_o \times radix^{power-stage}$ |
| Number of inputs/outputs | RADIX | Radix | Radix |
| Jump to next input/output | JTN_INPUT JTN_OUTPUT | $N_o \times radix^{power-stage}$ $N_o \times radix^{power-stage}$ | $N_o \times radix^{power-stage}$ $N_o \times radix^{(stage-1)}$ |

The Global Settings module 8.2 also calculates the start angle for the twiddle factors generation since all the twiddle factors are multiple of a single angle. The latter depends on DFT size and stage number. It is the product of two factors. The first one depends only on the stage number and the radix size. Its value is $2\pi/prime\_factor^{stage-1}$ $(1 \leq stage \leq power)$. In the described embodiment, an indexed table is used in order to store the angles (see Twiddle Matrix module 8.5). The table contains the $2i\pi/prime\_factor^{max\_power}$ $(0 \leq i < prime\_factor^{max\_power}-1)$ values where $max\_power$ is the maximum of powers among the managed DFTs. Then, the index $prime\_factor^{max\_power}$ corresponds to angle $2\pi$. In operation, a scaling is applied to make sure that the index $prime\_factor^{power}$ corresponds to the angle $2\pi$. Therefore, the value of the first factor becomes $prime\_factor^{stage-1+max\_power-power}$ $(1 \leq stage \leq power)$. The second factor is the quotient $N_o = N/prime\_factor^{power}$. Since $prime\_factor^{power}$ corresponds to the angle $2\pi$, only the value ($N_o$ mod $prime\_$

*factor^{power}*) can be used. This allows maintaining the angle in the interval $[0, 2\pi]$.

In the GPFA algorithm, rotations must be applied on the butterfly matrix *B* introduced in Multi-Radix Butterfly description. Applying rotation modifies the matrix in a notable way. The rotated butterfly matrix can be deduced from the reference one by a transposition or by a permutation of the columns or both. Advantageously these transposition and permutation are obtained by adapting the addressing of the reference table. The required operations depend on the value ($(N_o$ *modulo* $N_i$) *modulo Radix*) where $N_i$ is a power of current radix and the product $N_o \times N_i$ the size of the DFT. There is one possible value for radix-2, two possible values for radix-3, two possible values for radix-4 and four possible values for radix-5. Each possible value corresponds to a different matrix. The following table shows the relation between possible values and operations. The Global Settings module 8.2 generates the flags for inverting sinus values for the Multi-Radix Butterfly in the case of transposed matrices and the flags for permuting columns for the Radix Matrix module 8.4.

| $((N_o$ mod $N_i)$ mod Radix) | 0 | 1 | 2 | 3 | 4 |
|---|---|---|---|---|---|
| Radix-2 | | Orig. | | | |
| Radix-3 | | Orig. | Trans. | | |
| Radix-4 | | Orig. | | Trans. | |
| Radix-5 | | Orig. | Perm. | Perm.+Trans. | Trans. |
| Orig.: Original; Trans.: Transposed; Perm.: Permuted | | | | | |

The Radix Matrix module 8.4 provides the Multi-Radix Butterfly module 1.3 with the coefficients of the butterfly matrix *B* introduced in the Multi-Radix Butterfly description. In the described embodiment, the Multi-Radix Butterfly requires coefficients being produced column by column. Thus, the Radix Matrix module takes as input the current radix, the column number to output, and the flag for permuting columns. The coefficients $b_{k,l}$ can either be calculated or stored in a table. In that case, entire columns are stored and indexes are formed with the current radix and the requested column index. Since the Multi-Radix Butterfly works on real numbers, the Radix Matrix module 8.4 must then form columns of real numbers, alternating real parts and imaginary parts of the complex coefficients. When the Radix Matrix module 8.4 is requested to produce a column of the complex matrix, it first generates the pairs (cosine, sinus) with the sign of the sinus values for the all complex coefficients of the column and then the pairs (sinus, cosine) with opposite signs. The sign tells the Multi-Radix Butterfly module 1.3 whether addition or subtraction must be done on the sinus value.

The Twiddle Matrix module 8.5 provides the Multi-Radix Butterfly module 1.3 with the coefficients of the matrix *T* introduced in the Multi-Radix Butterfly description. It takes as input the current radix and the angle of rotation of the second element of the butterfly. The outputs are a column of coefficients and a column of signs. Given the twiddle factor $\alpha$ determined to rotate the second element of the butterfly, the Twiddle Matrix module 8.5 generates the sequence of twiddle factors $0, \alpha, 2\alpha, ...$ necessary to rotate all the elements of the butterfly. In the described embodiment, the Multi-Radix Butterfly requires coefficients column by column and works with real numbers. When the Twiddle Matrix module 8.5 is requested to produce twiddle factors, it first generates the pairs (cosine, sinus) with the sign of the sinus value for all complex coefficients of the column and then the pairs (sinus, cosine) with opposite signs. The sign tells the Multi-Radix Butterfly module 1.3 whether addition or subtraction must be done on the sinus value.

Cosines and sinuses values can be calculated or stored in a table. In that case, a single table for each prime factor is sufficient to store all values. The size of each table depends on the maximum power attached to the prime factor among the managed DFTs. The granularity of the table becomes $2\pi/prime\_factor^{max\_power}$ which contains the cosines and sinuses values of the angles $2i\pi/prime\_factor^{max\_power}$ ($0 \leq i \leq prime\_factor^{max\_power}-1$). A first optimization to reduce the sizes of tables is to use a property of sinus function. Angles *i* and $prime\_factor^{max\_power}-i$ $(0 \leq i < prime\_factor^{max\_power})$ are equal modulo $\pi$ and have equal cosines values and opposed sinus values. Only angles inferior to $\pi$ are necessary and the sizes of the tables become relatively $2^{max\_power(2)}/2$, $\lfloor 3^{max\_power(3)}/2 \rfloor$ and $\lfloor 5^{max\_power(5)}/2 \rfloor$ for the prime factors 2, 3 and 5. If the asked angle $\alpha$ is superior to $\lfloor prime\_factor^{max\_power}/2 \rfloor$, the new considered angle is $\lfloor prime\_factor^{max\_power}/2 \rfloor - \alpha$ and the sign of fetched sinus is opposed.

The Address Generator module 8.3 can be decomposed into 3 main parts, a first one is dedicated to the management of the loops, a second one to the accumulators used to generate addresses for the Data Manager module 1.1 and a third one to commands.

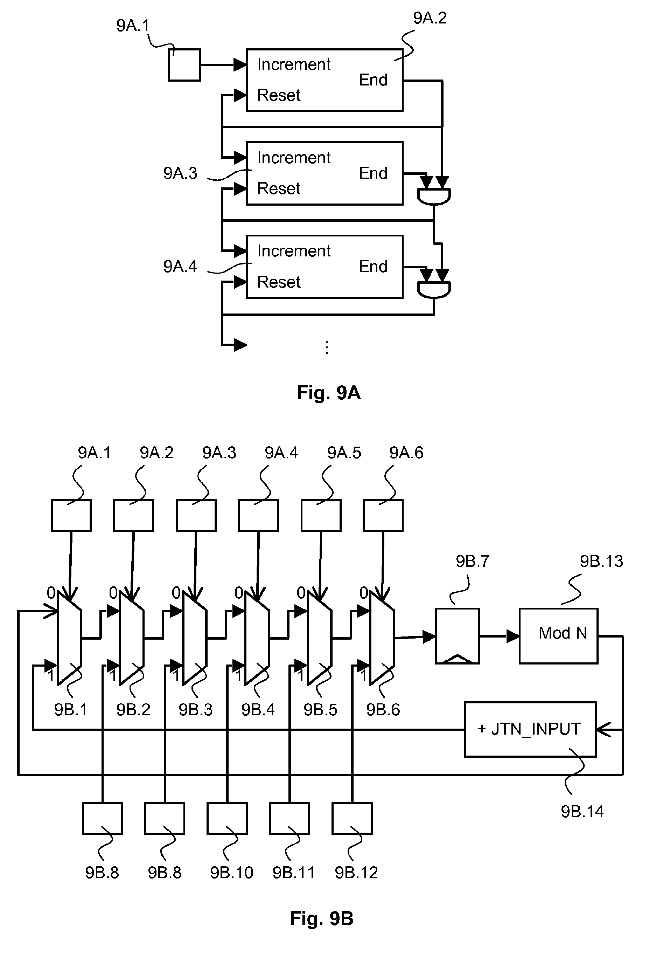

In the GPFA Algorithm, loops are used to determine the inputs and outputs of the butterflies. In the described embodiment, the Address Generator module 8.3 uses 6 cascaded loops which are first configured by the Global Settings module 8.2. The first loop TRANSVERSE (outermost loop) decomposes the two-dimensional DFT in many one-dimensional DFTs. The second loop DIVISION counts the number of divisions which correspond to the divide and conquer approach of the Cooley-Tukey algorithm. In the case of a radix of type 2, a third loop SUBDIVISION is used. The fourth loop BUTTERFLY sequences the interleaved butterflies. In the case of a radix of type 2, a fifth loop SUB-BUTTERFLY sequences the elementary butterflies which are of type 1. Finally, the sixth loop I/O (innermost loop) sequences the inputs and outputs of the butterfly. In the described embodiment, loops are implemented using counters to store the iteration number. Once loops are configured with the maximum number of iterations represented in Fig. 9A by the module 9A.1, the counter of the innermost loop 9A.2 starts counting. When reaching its last iteration or end, it increments the counter of the outer loop 9A.3 and resets itself. For all other counters such as 9A.4, they do the same with the counter of their outer loop but at the condition that the counters of their inner loop 9A.2 and 9A.3 reach their last iterations. The Address Generator module 8.5 ends when all counters reach their last iteration.

The addresses at destination to the Data Manager module 1.1 are linear combinations of the number of iteration of each loop. The coefficients of the linear combination are the increments or JTN values first initialized by the Global Settings module 8.2. In the described embodiment, no multiplication is made in order to reduce complexity and the calculation of the data addresses use intermediate accumulators for each loop. When resetting a counter of a loop, the accumulator attached to it updates its value with the one attached to the outermost loop whose counter does not reset. When incrementing a counter of a loop, the JTN value attached to the loop is added to the correspondent accumulator. The Fig. 9B illustrates the accumulator 9B.7 attached to innermost loop I/O. Depending on the end condition of the inner counters 9A-2 to 9A.6, the multiplexers 9B.2 to 9B.6 either reinitialize the accumulator with one of the values of inner accumulators 9B.8 to 9B.12 with priority to the outermost 9B.12, or use the value of the multiplexer 9B.1. This multiplexer allows or not the addition of the JTN value and is driven by the end condition of the first inner loop. In case of the innermost loop, this multiplexer 9B.1 is bypassed to use the JTN_INPUT value. The same scheme is used for inner accumulator with a decreasing number of multiplexers.

The innermost accumulator modulo $N$ 9B.13 is the read address at destination to the Data Manager module 1.1. The write address can be generated in two ways. The first uses two extra accumulators for the 2-innermost loops. The latter are the same as read address but where JTN values are permuted. The second uses a two dimensional array whose number of row and column is equal to the size of the radix. The generated read addresses are written row by row in the array. Once full, the written addresses are obtained by reading the array column by column. The counter CNT_IO can be used directly to drive the Radix Matrix module 8.4 which waits for column number. Because calculation starts with radix calculation, no delay on this address signal is needed. The angles to be applied for twiddle factors generation are given as the product of the reference angle generated by the Global Settings module 8.2 by CNT_BUTTERFLY. The resulting angle is then corrected to fit between 0 and $2\pi$ and sent to the Twiddle Matrix module 8.5. Each command must be sent so that data and coefficients at destination to the Multi-Radix Butterfly occur in phase.

In this first embodiment, all the DFTs of size $N=N_2\times N_3\times N_5=2^p\times 3^q\times 5^r$ are achievable. A radix-4 can be used to reduce the number of radix-2 stages and the calculation time at the same time. Nevertheless, some DFT become impossible to calculate because of their decomposition as a palindrome as showed by Johnson and Burrus. Suppose $N=N_{128}.N_3$ is the size of the DFT. $N_{128}=(4\times 2\times 4\times 4)$ cannot be decomposed correctly. A Radix-8 is required to make $N_{128}=(4\times 8\times 4)$.

Considering the architecture of the Multi-Radix Butterfly module 1.3, the calculation of a radix-8 butterfly would require 16 MAC units. To keep low the DFT complexity, the radix-8 butterfly can be done by sequencing a first stage of radix-2 butterflies and a second stage of radix-4 butterflies. Thus, no extra MAC unit is needed. Using the first part of the demonstration of the GentleMan-Sande Algorithm, the radix-8 matrix can be easily decomposed into the product:

$$W_8 = \left(P_4^2 \left(I_2 \times W_4\right)\right).\left(D_4^2 \left(W_2 \times I_4\right)\right)$$

This radix-8 will need to be raised by 1, 3, 5 or 7 depending of the DFT size. The lemma used for rotating a DFT gives:

$$W_8^{[r'=\mathrm{mod}(r,8)]} = \left(P_4^2 \left(I_2 \times W_4^{[r''=\mathrm{mod}(r',4)]}\right)\right)\left(D_4^{2[r']} \left(W_2 \times I_4\right)\right)$$

This radix-8 module is still incomplete since the application of twiddle factors is not there. Suppose

$$M_8^{[kr]} = \begin{pmatrix} 1 & 0 \\ 0 & \omega_8^{kr} \end{pmatrix} \text{ and } T_4^{[kr]} = \begin{pmatrix} 1 & 0 & 0 & 0 \\ 0 & \omega_4^{kr} & 0 & 0 \\ 0 & 0 & \omega_4^{2kr} & 0 \\ 0 & 0 & 0 & \omega_4^{3kr} \end{pmatrix}.$$

A complete radix-8 module with twiddle factors becomes:

$$D_8^{1[kr]}.W_8^{[r']} = \left(T_4^{[kr]} \times I_2\right)\left(I_4 \times M_8^{[kr]}\right)\left(P_4^2 \left(I_2 \times W_4^{[r']}\right)\right)\left(D_4^{2[r']}\left(W_2 \times I_4\right)\right)$$

$$D_8^{1[kr]}.W_8^{[r']} = \left(T_4^{[kr]} \times I_2\right).P_4^2.\left(M_8^{[kr]} \times I_4\right)\left(I_2 \times W_4^{[r']}\right)\left(D_4^{2[r']}\left(W_2 \times I_4\right)\right)$$

$$D_8^{1[kr]}.W_8^{[r']} = \left(P_4^2 \left(I_2 \times T_4^{[kr]}\right)\right)\left(I_2 \times W_4^{[r']}\right)\left(\left(M_8^{[kr]} \times I_4\right)D_4^{2[r']}\right)\left(W_2 \times I_4\right)$$

Finally, define a diagonal matrix $D'^{p}_{q,t}$ of order *N=pq* by:

$$D'^{p}_{q,t}(j,k) = \omega_N^{st} \qquad \text{if } j = k = sq + m,$$
$$= 0 \qquad \text{otherwise.}$$

The previous formula becomes:

$$D_8^{1[kr]}.W_8^{[r']} = P_4^2 \left(I_2 \times \left(T_4^{[kr]}W_4^{[r']}\right)\right)D'^{2}_{4,kr} D_4^{2[r']}\left(W_2 \times I_4\right)$$

The main interest of this formula is that the twiddle factor applied to the first element of both radices 2 and 4 butterflies results is always 1. It results in making some of the multiplication of the radix 4 within the radix 2 computation. Thus, the calculation of the first element does not require multipliers but only adders. This enables keeping the couple of adders inside the Multi-radix Butterfly module 1.3. Finally, the first stage is a typical radix-2 stage with specific twiddle factors and the second stage a typical radix-4 stage with interleaved outputs. No major modifications are needed.

In order to form palindromes, the Radix Selection module 8.1 is updated to sequence first radix-4 stages of type 1, an optional radix-2 type 1 or radix-8 stage and finally radix-4 stages of type 2. Radix-8 stage is composed of a radix-2 stage and a radix-4 stage and flags are created to differentiate them from regular ones. Moreover, since the power value is attached to the prime factor $2^p$, the stage counter must be increased by 2 for a radix-4. In the Global Settings module 8.2, if radix is 4, settings for loops of Address Generator module 8.3 are obtained by replacing all values *stage-1* by *stage-2.* Then, since the two parts of a radix-8 butterfly are very similar to a radix butterfly of type 2, loops settings are easily implemented. The table below summarizes the settings for loops attached to radix-8.

| Description | Name | Radix-8 1st part | Radix-8 2nd part |
|---|---|---|---|
| Number of divisions | NB_DIVISION | $2^{(stage-1)}$ | $2^{(stage-3)}$ |
| Jump to next division | JTN_DIVISION | $N_o \times 2^{power-(stage-1)}$ | $N_o \times 2^{power-(stage-2)}$ |
| Number of subdivisions | NB_SUBDIVISION | 1 | 1 |
| Jump to next subdivision | JTN_SUBDIVISION | - | - |
| Number of parallel schemes | NB_TRANSVERSE | $N_o$ | $N_o$ |
| Jump to next parallel scheme | JTN_TRANSVERSE | $N_i$ | $N_i$ |
| Number of interleaved butterflies | NB_BUTTERFLY | $2^{power-stage-2}$ | $2^{power-stage}$ |
| Jump to next interleaved butterfly | JTN_BUTTERFLY | $N_o$ | $N_o$ |
| Number of elementary butterfly | NB_SUBB | 4 | 2 |
| Jump to next elementary butterfly | JTN_SUBB_IN<br>JTN_SUBB_OUT | $N_o \times 2^{(stage-1)}$<br>$N_o \times 2^{(stage-1)}$ | $N_o \times 2^{(stage-1)}$<br>$N_o \times 2^{power-stage}$ |
| Number of inputs/outputs | RADIX | 2 | 4 |
| Jump to next input/output | JTN_INPUT<br>JTN_OUTPUT | $N_o \times 2^{power-stage}$<br>$N_o \times 2^{power-stage}$ | $N_o \times 2^{power-stage}$<br>$N_o \times 2^{(stage-2)}$ |

In the Radix Matrix module 8.4, coefficients of the radix-4 matrix are inserted into the table if the storage of coefficients is used. In the Twiddle Matrix module 8.5, the calculation of radix-2 butterflies inside radix-8 imposes to add an angle offset to the generated twiddle factors. This offset depends on the rank of radix-2 inside the radix-8 and its value is $e^{i\frac{\pi}{4} \cdot rank \cdot (N_o \bmod 8)}$ .

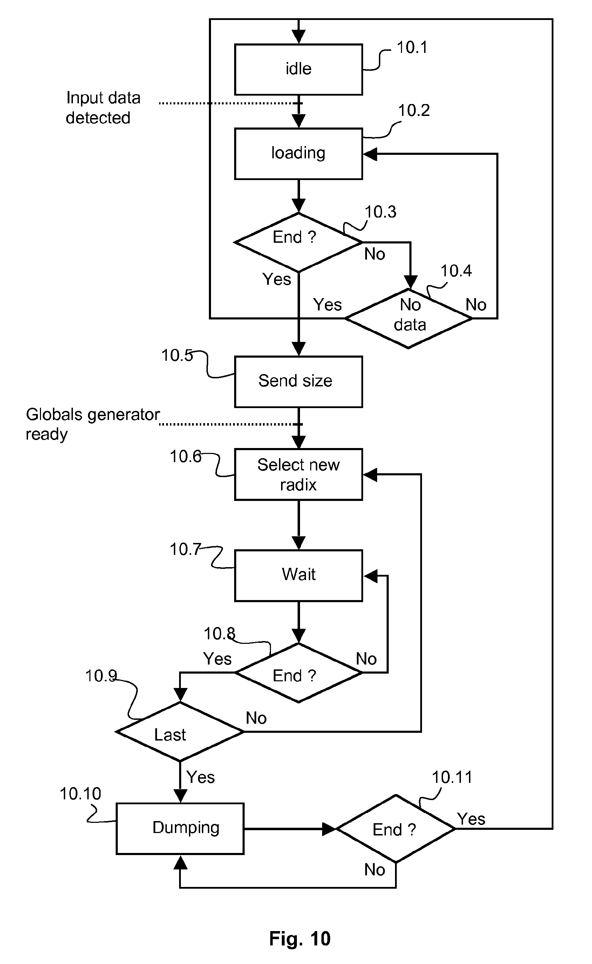

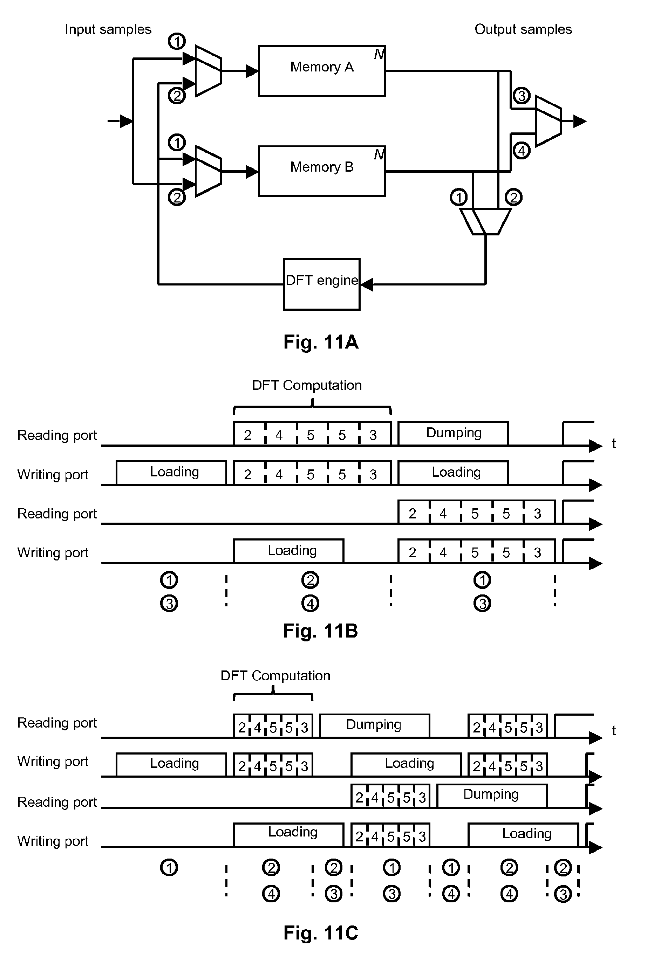

The Data Manager module 1.1 shall support all the operations for accessing data including loading and dumping data. It shall also come with a state machine that checks loading, DFT computation and dumping. The state machine depicted on Fig. 10 shows the functioning of the module. In its very basic function shown in Fig. 11a, the Data Manager module 1.1 consists of one double port memory (one reading and one for writing) of size $N_{max}$ (supposing $N_{max}$ is the maximum size of managed DFT) and multiplexers to root data and addresses. Loading operation is done by linking input samples to the write port of the memory and by addressing linearly the memory thanks to a counter for example. During computation, data is retrieved from the reading port of the memory and results are written trough the writing port. Addresses from the DFT engine are used at this time. The latency of the Multi-radix Butterfly module 1.3 protects from read/write overlaps, especially during radix of type 2 where inputs and outputs of butterflies are different. When completed, final results are dumped linearly from the reading port. Since loading and dumping are linear operations, a new loading can start just after the beginning of a dumping. Fig. 11b shows the timing sequence of the processing.

Several independent optimizations can be applied in order to reduce latency and even enable the computation of a constant flow of input samples.

The first optimization consists in increasing the DFT core driving clock which is independent from the user clock. It can severely reduce latency.

The second optimization pipelines the operation of loading, computing and dumping and is presented in Fig. 11A. This pipeline is made by using a second memory identical to the first one. While computing on samples of one memory, the other memory becomes available for loading and dumping. The two different memories are used alternatively for input/output operations and as working memory. This optimization reduces latency and enables the sequencing of successive DFTs provided that the loading of a new DFT takes more time than the computing of the current DFT. Combined with the previous optimization, it enables the sequencing of a wider panel of DFTs. Fig. 11B and Fig. 11C show the processing without and with first optimization.

The third optimization reduces the computation time without increasing the DFT internal clock which can be very useful when clock frequency reaches the limit of the target device. This solution exploits parallelism and is independent of the actual multi-radix butterfly unit. It could be used with any butterfly computation unit. This solution could also be implemented in software, for example on a multi core processor. During computation, a first half of samples is treated inside the Multi-radix Butterfly module 1.3 while the second half is treated in a new instantiated Multi-radix Butterfly module. The cut-out is made according to the even- and odd-numbered rows of the Ruritanian maps. The DFT engine remains unchanged but now outputs only addresses relatives to the points figuring on even rows of the Ruritanian map attached to the current radix. When addressing an even row, addresses for the next one (odd) will be deduced and points from both rows can be treated simultaneously inside two independent computation units. The advantage of this cut-out is that rows can be easily computed in parallel because of the strict identical operations made on rows. Several solutions exist but all must distribute points so that points figuring on even and odd rows of the Ruritanian map attached to the foreseen radix are always placed in two separate memories. This implies to redistribute points each time that the radix changes because of a different Ruritanian map. Thus, four distributions are foreseen: a first for loading, a second for passing from a radix to the same, a third for passing from a radix to another one and a last for dumping.

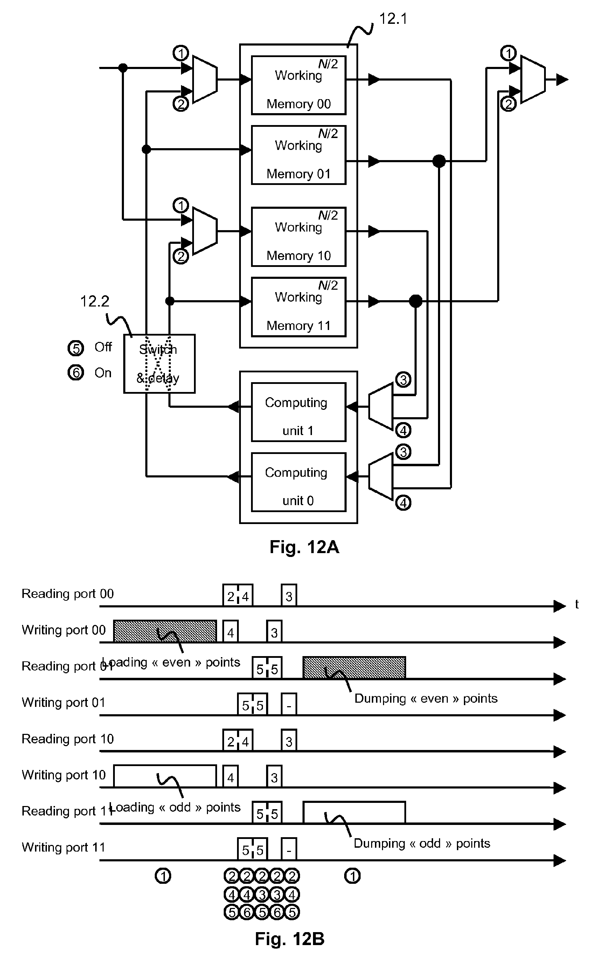

The solution described thereafter in details resolves the issue of data distribution and storage into two memories of size $N_{max}/2$, where $N_{max}$ is the maximum size of managed DFTs. Because read and write addresses will differ when changing radix, two more identical memories will be used to prevent read/write overlaps. Moreover, the particular radix sequence (4, 3, 5) will be used because of possible optimizations and eases of implementation. Fig. 12A and 12B show the overall solution with its time sequence of the processing. In order to keep at most the existing architecture, an abstraction layer encapsulates the four memories so that DFT engine access to memories as if there were a single one of size $N_{max}$. This layer introduces virtual addresses corresponding to addresses where data should be and physical addresses corresponding to addresses where data are really stored. This layer consists of selves-building address conversation tables based on the compression of the Ruritanian maps and logics for reorganizing data.

The compression transforms the two-dimensional Ruritanian map attached to a prime factor into a new Ruritanian map of two rows with the first row containing all the points from the even rows of original Ruritanian map and the second row all the points from the odd ones. The used algorithm is the following: Suppose $N$ is the size of the DFT. Points are inserted one by one from 0 to $N$-1 into the new array. When inserting, points are inserted on rows from column 0. Point is inserted on first row if it belongs to an even row of the Ruritanian map and on second row otherwise. When completed, a circular rotation is applied on second row to place the point $N_i$ under the point 0. An exception is made for Ruritanian map containing an odd number of rows and consists in adding a padding point on second row each time $N_o$ points have been inserted. However, it can be demonstrated that compressed Ruritanian maps attached to radix-3 and radix-5 contain always even points on their first row and odd points on their second one.

This compressed Ruritanian map represents the position of data inside the two memories. Suppose $N$ is the DFT size, the address conversion table used in abstraction layer contains the coordinates, row and column, of data 0 to data $N$-1 inside the compressed Ruritanian map. There are as many conversion tables as different Ruritanian maps excepting conversion tables attached to radix-3 and radix-5 which are always the same (see previous paragraph). This is why conversion tables for radix-4 must be built before processing a DFT. Suppose $N$ is the DFT size, $R_r$ the Ruritanian map of size $N_i$ rows $\times$ $N_o$ columns where $N_i$ is a power of $r$ and $N_o = N/N_i$ and $CT_r$ the conversion table. For regenerating a complete conversion table, pre-computed values are necessary such as the row $R_1$ in which point number 1 is placed in Ruritanian map and the final column $FCN_i$ in which point number $N_i$ is placed in compressed Ruritanian map. The accumulator $Rx$ contains the row in which point number $x$ is placed inside the Ruritanian map. The counter Jump is used to add padding element.

```
Point = 0;
Rx = 0;
Index0 = 0;
Index1 = FCNi;
Jump = 0;
While Point < N do
        If (Rx is even) then
                CT(Point) = (0,Index0);
                Index0 = Index0 + 1;
        Else
                CT(Point) = (1,Index1);
```

$$\mathrm{Index1 = Index1 + 1;}$$
$$\mathrm{End\ if;}$$
$$\mathrm{Jump = Jump + 1;}$$
$$\mathrm{If\ (Jump = N_o)\ then}$$
$$\mathrm{Jump = 0;}$$
$$\mathrm{Index1 = Index1 + 1;}$$
$$\mathrm{End\ if;}$$
$$\mathrm{Rx = (Rx + R1)\ mod\ N_i;}$$
$$\mathrm{Point = Point + 1;}$$
$$\mathrm{End\ while;}$$

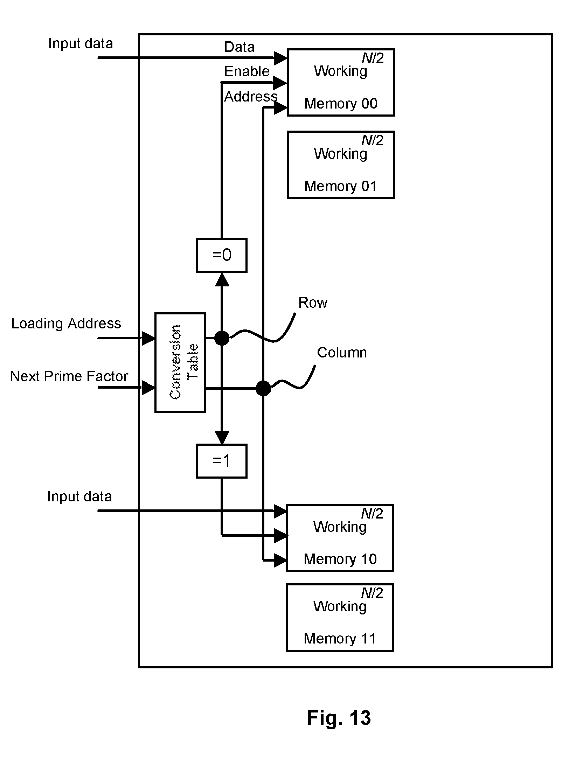

During data loading, data is distributed inside the two memories so that data can be easily accessed for future radix-4 butterflies as shown in Fig. 13. Radix-4 butterflies are computed at first because the decompositions of the managed DFT sizes imply always radix-4 butterflies, enabling optimization on data loading (Same argument is used for dumping which will come always after a radix-3). Since both loading and address conversion table building are made linearly, loading can start just after the beginning of radix-4 address conversion table building.

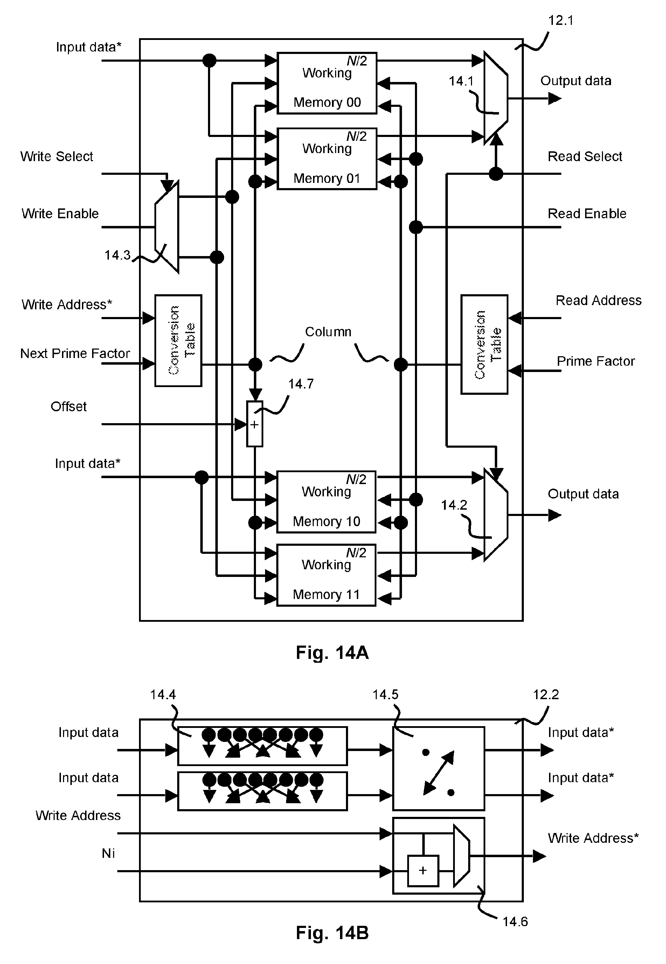

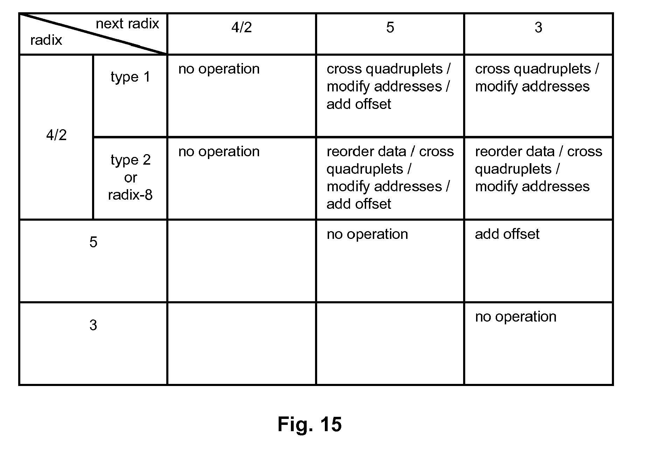

During butterflies' computation, input data is fetched from the two memories just by converting the read address from the DFT engine and applying the result to the read address ports of the four memories. As shown on Fig. 14A, multiplexers 14.1 and 14.2 are used at data bus outputs to select the memories that contain data. The storage of results from Multi-radix Butterfly module with write address from DFT engine requires first to change pair of memories when next radix is different of the current one (radix-2 is considered as a radix-4) preventing read/write overlaps and when radix is the last of the sequence so that loading and dumping data are never in the same memory. Multiplexer 14.3 enables to do this. Then more operations shall be applied depending on cases. The first operation works on data. Data from both multi-radix butterflies is reorganized independently by set of 8 elements according the Fig. 14.4. The sequence (d(0), d(1), d(2), d(3), d(4), d(5), d(6), d(7)) becomes (d(0), d(4), d(1), d(5), d(2), d(6), d(3), d(7)). It implies latency which shall be applied to addresses to maintain both signals in phase. This operation must be made when current radix is of type 2 or when radix is 4 and belongs to radix-8 computation. It is necessary to alternate data that will come either to the first memory or the second one. The second operation works still on data. This time data from both Multi-radix Butterflies is scrambled between them by set of 2 elements. Supposing the sequence (d(0),d(1)) comes from the first butterfly and (e(0),e(1)) comes from the second one simultaneously, this scrambling scrambles the quadruplet and outputs simultaneously the sequence (d(0),e(0)) to the first memory and (d(1),e(1)) to the second one as shown by Fig. 14B (Element 14.5). It implies latency too which shall be passed to address. This operation comes with a third operation that works on set of two write addresses from DFT engine shown in Fig. 14.6. The sequence (a(0),a(1)) becomes (a(0), $a(0)+N_i$) where $N_i$ the power of current radix in the decomposition of the size $N$ of DFT. These two last operations redistribute the data inside the two memories and are necessary when passing from prime factor 4 to another one. Finally, the last operation works on converted addresses but only those attached to the second memory. An offset corresponding to the column number in which the point number $N_o$ (=$N/N_i$) is placed inside the Compressed Ruritanian map attached to the next prime factor is added on addresses by the adder 14.7. This is required because the point coming simultaneously with point number 0 is point number $N_o$ and must be applied when prime factor 5 belongs to decomposition of $N$. Finally, the table presented in Fig. 15 resumes the cases in which the operations must be applied.

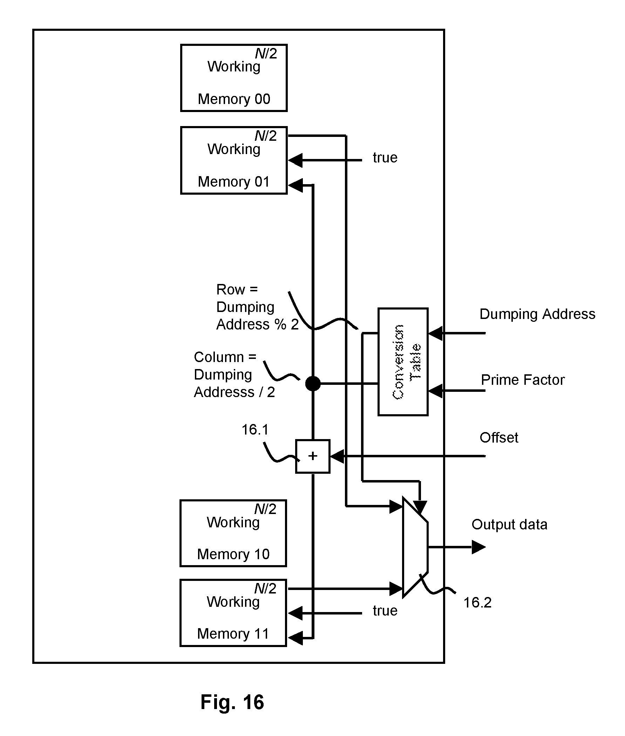

Before results dumping, because of the radix sequence (4, 5, 3) and because of the particular form of conversion table attached to power of 3, even points are stored linearly inside first memory whereas odd points are stored linearly inside the second one but from point number $N_3$. The position of point number 1 must be known in order to correct addresses for second memory. Then, points are output alternatively from either first memory or second one. Fig. 16 represents the block diagram for data dumping. Adder 16.1 is used to correct addresses for the second memory. Multiplexer module 16.2 is used to alternate outputs of both memories.

## Claims

1. Computation module to compute a multi radix butterfly to be used in DFT calculation comprising

- multiplication means to compute the product of a complex matrix of order corresponding to the current radix with a column vector of complex data values;
- rotation means to apply a rotation on all the elements of the column vector resulting from the multiplication means ;

**characterized in that**:

- these means are implemented in the form of a plurality of elementary computation units, each one treating one row of the matrix in parallel, the number of such computation units corresponding to the higher radix that could be computed by the computation module ;
- it further comprises means to deactivate some of the elementary computation units in order to allow computation of butterflies of lower radices.

2. Computation module according to Claim 1, **characterized in that** each elementary computation unit comprises for each two real part of the complex:

- multiplier adder means to compute the matrix product ;
- multiplication means to compute the rotation ; and **in that**:
- the same multiplier is used for the multiplier adder means and the multiplication means.

3. Computation module according to Claim 2, **characterized in that**, the first complex element of each row of the matrix being constituted by values 0 or 1, the computation module comprises means to enter this first element by the accumulation entry of the multiplier adder means in order to save two multiplier adder steps for the multiplication computation.

4. Computation module according to one of the claims 1 to 3, **characterized in that**, complex data being received at a given complex frequency, the computation module works on real works at twice the complex frequency.

5. Computation module according to one of the claims 1 to 4, **characterized in that**, the first two rows of the real matrix being constituted by values 0 or 1, the first elementary computation unit of the plurality comprises adder instead of multipliers.

6. Computation module according to one of the claims 1 to 4, **characterized in that**, the numbers being represented according to a fixed point scheme, the module further comprises a scaling unit to control the number of bits used to represent data.

7. Computation module according to Claim 6, **characterized in that**, the scaling unit is dynamic meaning that it can be customized according to different requirements in terms of tradeoff between dynamic and precision.

8. Computation module according to one of the claims 1 to 7, **characterized in that**, each elementary computation unit further comprises means to change the sign of the accumulation.

9. Computation module according to Claim 5, **characterized in that**, it further comprises means to deviate input of the first elementary computation unit, composed of adder, to unused elementary computation unit to allow a step of gain multiplication to be implemented using the multipliers of the elementary computation unit for radix below the maximum radix that could be calculated.

$$\begin{bmatrix} t_{0,1} & t_{0,1} & 0 & 0 & 0 & 0 & 0 & 0 & 0 & 0 \\ t_{1,0} & t_{1,1} & 0 & 0 & 0 & 0 & 0 & 0 & 0 & 0 \\ 0 & 0 & t_{2,2} & t_{2,3} & 0 & 0 & 0 & 0 & 0 & 0 \\ 0 & 0 & t_{3,2} & t_{3,3} & 0 & 0 & 0 & 0 & 0 & 0 \\ 0 & 0 & 0 & 0 & t_{4,4} & t_{4,5} & 0 & 0 & 0 & 0 \\ 0 & 0 & 0 & 0 & t_{5,4} & t_{5,5} & 0 & 0 & 0 & 0 \\ 0 & 0 & 0 & 0 & 0 & 0 & t_{6,6} & t_{6,7} & 0 & 0 \\ 0 & 0 & 0 & 0 & 0 & 0 & t_{7,6} & t_{7,7} & 0 & 0 \\ 0 & 0 & 0 & 0 & 0 & 0 & 0 & 0 & t_{8,8} & t_{8,9} \\ 0 & 0 & 0 & 0 & 0 & 0 & 0 & 0 & t_{9,8} & t_{9,9} \end{bmatrix} \begin{bmatrix} b_{0,0} & b_{0,1} & b_{0,2} & b_{0,3} & b_{0,4} & b_{0,5} & b_{0,6} & b_{0,7} & b_{0,8} & b_{0,9} \\ b_{1,0} & b_{1,1} & b_{1,2} & b_{1,3} & b_{1,4} & b_{1,5} & b_{1,6} & b_{1,7} & b_{1,8} & b_{1,9} \\ b_{2,0} & b_{2,1} & b_{2,2} & b_{2,3} & b_{2,4} & b_{2,5} & b_{2,6} & b_{2,7} & b_{2,8} & b_{2,9} \\ b_{3,0} & b_{3,1} & b_{3,2} & b_{3,3} & b_{3,4} & b_{3,5} & b_{3,6} & b_{3,7} & b_{3,8} & b_{3,9} \\ b_{4,0} & b_{4,1} & b_{4,2} & b_{4,3} & b_{4,4} & b_{4,5} & b_{4,6} & b_{4,7} & b_{4,8} & b_{4,9} \\ b_{5,0} & b_{5,1} & b_{5,2} & b_{5,3} & b_{5,4} & b_{5,5} & b_{5,6} & b_{5,7} & b_{5,8} & b_{5,9} \\ b_{6,0} & b_{6,1} & b_{6,2} & b_{6,3} & b_{6,4} & b_{6,5} & b_{6,6} & b_{6,7} & b_{6,8} & b_{6,9} \\ b_{7,0} & b_{7,1} & b_{7,2} & b_{7,3} & b_{7,4} & b_{7,5} & b_{7,6} & b_{7,7} & b_{7,8} & b_{7,9} \\ b_{8,0} & b_{8,1} & b_{8,2} & b_{8,3} & b_{8,4} & b_{8,5} & b_{8,6} & b_{8,7} & b_{8,8} & b_{8,9} \\ b_{9,0} & b_{9,1} & b_{9,2} & b_{9,3} & b_{9,4} & b_{9,5} & b_{9,6} & b_{9,7} & b_{9,8} & b_{9,9} \end{bmatrix} \begin{bmatrix} d_0 \\ d_1 \\ d_2 \\ d_3 \\ d_4 \\ d_5 \\ d_6 \\ d_7 \\ d_8 \\ d_9 \end{bmatrix}$$

**Fig. 2A**

$$\begin{bmatrix} 1 & 0 & 0 & 0 & 0 & 0 & 0 & 0 & 0 & 0 \\ 0 & 1 & 0 & 0 & 0 & 0 & 0 & 0 & 0 & 0 \\ 0 & 0 & t_{2,2} & -t_{3,2} & 0 & 0 & 0 & 0 & 0 & 0 \\ 0 & 0 & t_{3,2} & t_{2,2} & 0 & 0 & 0 & 0 & 0 & 0 \\ 0 & 0 & 0 & 0 & t_{4,4} & -t_{5,4} & 0 & 0 & 0 & 0 \\ 0 & 0 & 0 & 0 & t_{5,4} & t_{4,4} & 0 & 0 & 0 & 0 \\ 0 & 0 & 0 & 0 & 0 & 0 & t_{6,6} & -t_{7,6} & 0 & 0 \\ 0 & 0 & 0 & 0 & 0 & 0 & t_{7,6} & t_{6,6} & 0 & 0 \\ 0 & 0 & 0 & 0 & 0 & 0 & 0 & 0 & t_{8,8} & -t_{9,8} \\ 0 & 0 & 0 & 0 & 0 & 0 & 0 & 0 & t_{9,8} & t_{8,8} \end{bmatrix} \begin{bmatrix} 1 & 0 & 1 & 0 & 1 & 0 & 1 & 0 & 1 & 0 \\ 0 & 1 & 0 & 1 & 0 & 1 & 0 & 1 & 0 & 1 \\ 1 & 0 & b_{2,2} & -b_{3,2} & b_{2,4} & -b_{3,4} & b_{2,6} & -b_{3,6} & b_{2,8} & -b_{3,8} \\ 0 & 1 & b_{3,2} & b_{2,2} & b_{3,4} & b_{2,4} & b_{3,6} & b_{2,6} & b_{3,8} & b_{2,8} \\ 1 & 0 & b_{4,2} & -b_{5,2} & b_{4,4} & -b_{5,4} & b_{4,6} & -b_{5,6} & b_{4,8} & -b_{5,8} \\ 0 & 1 & b_{5,2} & b_{4,2} & b_{5,4} & b_{4,4} & b_{5,6} & b_{4,6} & b_{5,8} & b_{4,8} \\ 1 & 0 & b_{6,2} & -b_{7,2} & b_{6,4} & -b_{7,4} & b_{6,6} & -b_{7,6} & b_{6,8} & -b_{7,8} \\ 0 & 1 & b_{7,2} & b_{6,2} & b_{7,4} & b_{6,4} & b_{7,6} & b_{6,6} & b_{7,8} & b_{6,8} \\ 1 & 0 & b_{8,2} & -b_{9,2} & b_{8,4} & -b_{9,4} & b_{8,6} & -b_{9,6} & b_{8,8} & -b_{9,8} \\ 0 & 1 & b_{9,2} & b_{8,2} & b_{9,4} & b_{8,4} & b_{9,6} & b_{8,6} & b_{9,8} & b_{8,8} \end{bmatrix} \begin{bmatrix} d_0 \\ d_1 \\ d_2 \\ d_3 \\ d_4 \\ d_5 \\ d_6 \\ d_7 \\ d_8 \\ d_9 \end{bmatrix}$$

**Fig. 2B**

EP 2 144 172 A1

**Fig. 3**

**Fig. 1**

21

| Stage | Clock | 0 | 1 | 2 | 3 | 4 | 5 | 6 | 7 | 8 | 9 | 10 | 11 | 12 | 13 | 14 | 15 | 16 | 17 | 18 | 19 |
|---|---|---|---|---|---|---|---|---|---|---|---|---|---|---|---|---|---|---|---|---|---|
| 1 | D | $d_0$ | $d_1$ | $d_2$ | $d_3$ | $d_4$ | $d_5$ | $d'_0$ | $d'_1$ | $d'_2$ | $d'_3$ | $d'_4$ | $d'_5$ | $d''_0$ | $d''_1$ | $d''_2$ | $d''_3$ | $d''_4$ | $d''_5$ | | |
| | C | | | 0 | | | | | | 0 | | | | | | 0 | | | | | |
| 2 | 4.1 | | $d_0$ | $d_1$ | $d_2$ | $d_3$ | $d_4$ | $d_5$ | $d'_0$ | $d'_1$ | $d'_2$ | $d'_3$ | $d'_4$ | $d'_5$ | $d''_0$ | $d''_1$ | $d''_2$ | $d''_3$ | $d''_4$ | $d''_5$ | |
| | 4.2 | | | 0 | 1 | $b_{3,2}$ | $b_{3,3}$ | $b_{3,4}$ | $b_{3,5}$ | 0 | 1 | $b_{3,2}$ | $b_{3,3}$ | $b_{3,4}$ | $b_{3,5}$ | 0 | 1 | $b_{3,2}$ | $b_{3,3}$ | $b_{3,4}$ | $b_{3,5}$ |
| 3 | 4.3 | | | $p_0$ | $p_1$ | $p_2$ | $p_3$ | $p_4$ | $p_5$ | $p'_0$ | $p'_1$ | $p'_2$ | $p'_3$ | $p'_4$ | $p'_5$ | $p''_0$ | $p''_1$ | $p''_2$ | $p''_3$ | $p''_4$ | $p''_5$ |
| | 4.7 | | | 0 | $s_0$ | $s_1$ | $s_2$ | $s_3$ | $s_4$ | 0 | $s'_0$ | $s'_1$ | $s'_2$ | $s'_3$ | $s'_4$ | 0 | $s''_0$ | $s''_1$ | $s''_2$ | $s''_3$ | $s''_4$ |
| 4 | 4.4 | | | | $s_0$ | $s_1$ | $s_2$ | $s_3$ | $s_4$ | $x_3$ | $s'_0$ | $s'_1$ | $s'_2$ | $s'_3$ | $s'_4$ | $x'_3$ | $s''_0$ | $s''_1$ | $s''_2$ | $s''_3$ | $s''_4$ |

**Fig. 5A**

| Stage | Clock | 0 | 1 | 2 | 3 | 4 | 5 | 6 | 7 | 8 | 9 | 10 | 11 | 12 | 13 | 14 | 15 | 16 | 17 | 18 | 19 |
|---|---|---|---|---|---|---|---|---|---|---|---|---|---|---|---|---|---|---|---|---|---|
| 1 | D | $d_0$ | $d_1$ | $d_2$ | $d_3$ | $d_4$ | $d_5$ | $d'_0$ | $d'_1$ | $d'_2$ | $d'_3$ | $d'_4$ | $d'_5$ | $d''_0$ | $d''_1$ | $d''_2$ | $d''_3$ | $d''_4$ | $d''_5$ | | |
| | C | | | | $d_1$ | | | | | | $d'_1$ | | | | | | $d''_1$ | | | | |
| 2 | 4.1 | | | | $d_2$ | $d_3$ | $d_4$ | $d_5$ | | | $d'_2$ | $d'_3$ | $d'_4$ | $d'_5$ | | | $d''_2$ | $d''_3$ | $d''_4$ | $d''_5$ | |
| | 4.2 | | | | $b_{3,2}$ | $b_{3,3}$ | $b_{3,4}$ | $b_{3,5}$ | | | $b_{3,2}$ | $b_{3,3}$ | $b_{3,4}$ | $b_{3,5}$ | | | $b_{3,2}$ | $b_{3,3}$ | $b_{3,4}$ | $b_{3,5}$ | |
| 3 | 4.3 | | | | | $p_2$ | $p_3$ | $p_4$ | $p_5$ | | | $p'_2$ | $p'_3$ | $p'_4$ | $p'_5$ | | | $p''_2$ | $p''_3$ | $p''_4$ | $p''_5$ |
| | 4.7 | | | | | $d_1$ | $s_2$ | $s_3$ | $s_4$ | | | $d'_1$ | $s'_2$ | $s'_3$ | $s'_4$ | | | $d''_1$ | $s''_2$ | $s''_3$ | $s''_4$ |
| 4 | 4.4 | | | | | | $s_2$ | $s_3$ | $s_4$ | $x_3$ | | | $s'_2$ | $s'_3$ | $s'_4$ | $x'_3$ | | | $s''_2$ | $s''_3$ | $s''_4$ |

**Fig. 5B**

| Stage | Clock | 0 | 1 | 2 | 3 | 4 | 5 | 6 | 7 | 8 | 9 | 10 | 11 | 12 | 13 | 14 | 15 | 16 | 17 | 18 | 19 |
|---|---|---|---|---|---|---|---|---|---|---|---|---|---|---|---|---|---|---|---|---|---|
| 1 | D | $d_0$ | $d_1$ | $d_2$ | $d_3$ | $d_4$ | $d_5$ | $d'_0$ | $d'_1$ | $d'_2$ | $d'_3$ | $d'_4$ | $d'_5$ | $d''_0$ | $d''_1$ | $d''_2$ | $d''_3$ | $d''_4$ | $d''_5$ | | |
| | C | | | | $d_1$ | | | | | | $d'_1$ | | | | | 0 | $d''_1$ | | | | |
| 2 | 4.1 | | | | $d_2$ | $d_3$ | $d_4$ | $d_5$ | | | $d'_2$ | $d'_3$ | $d'_4$ | $d'_5$ | $x_2$ | $x_3$ | $d''_2$ | $d''_3$ | $d''_4$ | $d''_5$ | |
| | 4.2 | | | | $b_{3,2}$ | $b_{3,3}$ | $b_{3,4}$ | $b_{3,5}$ | | | $b_{3,2}$ | $b_{3,3}$ | $b_{3,4}$ | $b_{3,5}$ | $t_{3,2}$ | $t_{2,2}$ | $b_{3,2}$ | $b_{3,3}$ | $b_{3,4}$ | $b_{3,5}$ | |
| 3 | 4.3 | | | | | $p_2$ | $p_3$ | $p_4$ | $p_5$ | | | $p'_2$ | $p'_3$ | $p'_4$ | $p'_5$ | $y_0$ | $y_1$ | $p''_2$ | $p''_3$ | $p''_4$ | $p''_5$ |
| | 4.7 | | | | | $d_1$ | $s_2$ | $s_3$ | $s_4$ | | | $d'_1$ | $s'_2$ | $s'_3$ | $s'_4$ | 0 | $y_0$ | $d''_1$ | $s''_2$ | $s''_3$ | $s''_4$ |
| 4 | 4.4 | | | | | | $s_2$ | $s_3$ | $s_4$ | $x_3$ | | | $s'_2$ | $s'_3$ | $s'_4$ | $x'_3$ | $y_0$ | $r_3$ | $s''_2$ | $s''_3$ | $s''_4$ |

**Fig. 5C**

**Fig. 6**

**Fig. 4**

**Fig. 7**

**Fig. 8**

**Fig. 9A**

**Fig. 9B**

**Fig. 10**

Input samples

Output samples

Memory A

Memory B

DFT engine

**Fig. 11A**

DFT Computation

Reading port | 2 | 4 | 5 | 5 | 3 | Dumping | t

Writing port | Loading | 2 | 4 | 5 | 5 | 3 | Loading

Reading port | 2 | 4 | 5 | 5 | 3

Writing port | Loading | 2 | 4 | 5 | 5 | 3

① ② ①
③ ④ ③

**Fig. 11B**

DFT Computation

Reading port | 2|4|5|5|3 | Dumping | 2|4|5|5|3 | t

Writing port | Loading | 2|4|5|5|3 | Loading | 2|4|5|5|3

Reading port | 2|4|5|5|3 | Dumping

Writing port | Loading | 2|4|5|5|3 | Loading

① ② ② ① ① ② ②
④ ③ ③ ④ ④ ③

**Fig. 11C**

Fig. 12A

Fig. 12B

Fig. 13

**Fig. 14A**

**Fig. 14B**

| radix ⟍ next radix | | 4/2 | 5 | 3 |
|---|---|---|---|---|
| 4/2 | type 1 | no operation | cross quadruplets / modify addresses / add offset | cross quadruplets / modify addresses |
| | type 2 or radix-8 | no operation | reorder data / cross quadruplets / modify addresses / add offset | reorder data / cross quadruplets / modify addresses |
| 5 | | | no operation | add offset |
| 3 | | | | no operation |

## Fig. 15

Fig. 16

**Fig. 17**

Europäisches
Patentamt
European
Patent Office
Office européen
des brevets

**EUROPEAN SEARCH REPORT**

Application Number

EP 08 15 9847

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | US 2006/184598 A1 (BUCHERT RYAN S [US] ET AL) 17 August 2006 (2006-08-17) | 1,4-9 | INV. G06F17/14 |
| A | * paragraphs [0002], [0008], [0030] - [0043], [0046]; figure 5 * | 2,3 | |
| A | LEE S-Y ET AL: "VLSI implementation of programmable FFT architectures for OFDM communication system" IWCMC 2006 - PROCEEDINGS OF THE 2006 INTERNATIONAL WIRELESS COMMUNICATIONS AND MOBILE COMPUTING CONFERENCE, vol. 2006, 1 January 2006 (2006-01-01), pages 893-898, XP002540599 abstract; section 3; Table IV, figures 7-10 | 1 | |
| A | JAMES C SCHATZMAN: "Index mappings for the fast Fourier transform" IEEE TRANSACTIONS ON SIGNAL PROCESSING, IEEE SERVICE CENTER, NEW YORK, NY, US, vol. 44, no. 3, 1 March 1996 (1996-03-01), XP011057360 ISSN: 1053-587X section II, table II | 1 | TECHNICAL FIELDS SEARCHED (IPC) G06F |
| A | US 4 528 641 A (BURROWS JAMES L [US]) 9 July 1985 (1985-07-09) * column 5, line 19 - line 24; figure 1 * * column 6, line 26 - line 64; figure 6 * | 1-9 | |

-/--

The present search report has been drawn up for all claims

| Place of search | Date of completion of the search | Examiner |
|---|---|---|
| Berlin | 1 October 2009 | Virnik, Elena |

EPO FORM 1503 03.82 (P04C01)

Europäisches
Patentamt

European
Patent Office

Office européen
des brevets

# EUROPEAN SEARCH REPORT

Application Number

EP 08 15 9847

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| A | TAKAHASHI D ET AL: "HIGH-PERFORMANCE RADIX-2, 3 AND 5 PARALLEL 1-D COMPLEX FFT ALGORITHMS FOR DISTRIBUTED-MEMORY PARALLEL COMPUTERS" JOURNAL OF SUPERCOMPUTING, KLUWER ACADEMIC PUBLISHERS, DORDRECHT, NL, vol. 15, no. 2, 1 February 2000 (2000-02-01), pages 207-228, XP000970007 ISSN: 0920-8542 abstract; sections 4, 6. ----- | 1-9 | |
| D,A | TEMPERTON C: "A generalized prime factor FFT algorithm for any N=2$<p>$3$<q>$5$<r>$" SIAM JOURNAL ON SCIENTIFIC AND STATISTICAL COMPUTING, PHILADELPHIA, PA, US, vol. 13, no. 3, 1 May 1992 (1992-05-01), pages 676-686, XP009120777 ISSN: 0196-5204 * the whole document * ----- | 1-9 | |
| D,A | TEMPERTON C: "Self-sorting in-place fast Fourier transforms" SIAM JOURNAL ON SCIENTIFIC AND STATISTICAL COMPUTING, PHILADELPHIA, PA, US, vol. 12, no. 4, 1 July 1991 (1991-07-01), pages 808-823, XP009120756 ISSN: 0196-5204 * the whole document * ----- -/-- | 1-9 | TECHNICAL FIELDS SEARCHED (IPC) |

The present search report has been drawn up for all claims

| Place of search | Date of completion of the search | Examiner |
|---|---|---|
| Berlin | 1 October 2009 | Virnik, Elena |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................

& : member of the same patent family, corresponding
   document

EPO FORM 1503 03.82 (P04C01)

**Europäisches Patentamt**
**European Patent Office**
**Office européen des brevets**

## EUROPEAN SEARCH REPORT

Application Number

EP 08 15 9847

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | TEMPERTON ET AL: "Implementation of a self-sorting in-place prime factor FFT algorithm" JOURNAL OF COMPUTATIONAL PHYSICS, LONDON, GB, vol. 58, no. 3, 15 May 1985 (1985-05-15), pages 283-299, XP024751377 ISSN: 0021-9991 [retrieved on 1985-05-15] * the whole document * | 1-9 | |
| A | EP 0 827 087 A (SONY CORP [JP]) 4 March 1998 (1998-03-04) * column 1, line 53 - column 2, line 5 * * column 8, line 4 - column 9, line 5 * * figure 1 * | 4 | |
| A | YU-WEI LIN ET AL: "A new dynamic scaling FFT processor" CIRCUITS AND SYSTEMS, 2004. PROCEEDINGS. THE 2004 IEEE ASIA-PACIFIC CO NFERENCE ON TAINAN, TAIWAN DEC. 6-9, 2004, PISCATAWAY, NJ, USA,IEEE, vol. 1, 6 December 2004 (2004-12-06), pages 449-452, XP010783145 ISBN: 978-0-7803-8660-0 section 3, paragraph 1 | 6,7 | |

TECHNICAL FIELDS
SEARCHED (IPC)

The present search report has been drawn up for all claims

| Place of search | Date of completion of the search | Examiner |
|---|---|---|
| Berlin | 1 October 2009 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 15 9847

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2009

| Patent document cited in search report | | Publication date | Patent family member(s) | | Publication date |
|---|---|---|---|---|---|
| US 2006184598 | A1 | 17-08-2006 | NONE | | |
| US 4528641 | A | 09-07-1985 | NONE | | |
| EP 0827087 | A | 04-03-1998 | JP | 3821316 B2 | 13-09-2006 |
| | | | JP | 10049518 A | 20-02-1998 |
| | | | US | 6058409 A | 02-05-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 05300651 A

- US 7028064 B2

### Non-patent literature cited in the description

- **John G. Proakis ; Dimitris G. Manolakis.** Digital Signal Processing, principles, algorithms, and applications. Macmillan Publishing Company, 1992
- **James W. Cooley ; John W. Tukey.** An algorithm for the machine calculation of complex Fourier. *Math. Comput.,* 1965, vol. 19, 297-301
- An in-place in-order radix-2 FFT. *Proc. IEEE ICASSP,* 1984, 28A.2.1-4
- **Clive Temperton.** Self-sorting in place fast Fourier transforms. *SIAM J. Sci. Stat. Comput.,* July 1991, vol. 12, 808-823
- **Good.** The interaction algorithm and practical Fourier analysis. *J. Roy. Statist. Soc. Ser. B.,* 1958, vol. 20, 361-372
- Index mappings for multidimensional formulation of the DFT and convolution. *IEEE Trans. Acoust. Speech Signal Process.,* 1977, vol. 25, 239-242

- An in-place, in-order prime factor FFT algorithm. *IEEE Trans. Acoust. Speech Signal Process.,* 1981, vol. 29, 806-817
- **I. J. Good.** The relationship between two Fast Fourier Transforms. *IEEE Trans. Comp.,* 1971, vol. 20, 310-317
- **Johnson-Burrus ; Temperton.** Implementation of self-soiting in-place prime factor FFT algorithm. *J. Comput. Phys.,* 1985, vol. 58, 283-299
- **Temperton.** A generalized prime factor FFT algorithm for any 2p3q5. *SIAM J. Sci. Stat. Comput.,* May 1992, vol. 13, 676-686
- **L.R. Rabiner ; B. Gold.** Theory and Application of Digital Signal Processing. Prentice-Hall, Inc, 1975
- **E. H.Wold ; A. M. Despain.** Pipeline and parallel-pipeline FFT processors for VLSI implementation. *IEEE Trans. Comput.,* May 1984, vol. C-33(5), 414-426